# EUROPÄISCHE PATENTSCHRIFT

(11) **EP 2 374 179 B1**
(45) Veröffentlichungstag und Bekanntmachung des Hinweises auf die Patenterteilung: **12.02.2014**
(21) Anmeldenummer: 09768079.7
(22) Anmeldetag: 11.12.2009
(51) Int. Cl.: H01M 8/10, H01M 8/04, H01M 8/06

(54) **VORRICHTUNG ZUM BEREITSTELLEN EINES BRENNSTOFF ENTHALTENDEN TRÄGERGASES UND BRENNSTOFFZELLE MIT EINER SOLCHEN VORRICHTUNG**
DEVICE FOR PROVIDING A CARRIER GAS CONTAINING FUEL AND FUEL CELL WITH SUCH A DEVICE
DISPOSITIF POUR FOURNIR UN GAZ PORTEUR CONTENANT DE COMBUSTIBLE ET PILE A COMBUSTIBLE AVEC UN TEL DISPOSITIF

(30) Priorität: 11.12.2008 DE 102008061771
(43) Veröffentlichungstag der Anmeldung: 12.10.2011
(73) Patentinhaber: Siqens GmbH, 82110 Germering (DE)
(72) Erfinder: Harbusch, Volker, 81371 München (DE)
(74) Vertreter: Ganahl, Bernhard
(86) Internationale Anmeldenummer: PCT/EP2009/066995
(87) Internationale Veröffentlichungsnummer: WO 2010/066900

(56) Entgegenhaltungen:
- WO-A1-97/50140
- WO-A2-2006/010012
- JP-A- 63 237 363

## Beschreibung

Die vorliegende Erfindung betrifft eine Befeuchtungseinheit zum Bereitstellen eines Brennstoff enthaltenden Trägergases zur Versorgung einer Brennstoffzelle. Weiterhin betrifft die vorliegende Erfindung eine Brennstoffzelle mit einer solchen Befeuchtungseinheit.

Aus der EP 1 383 191 A1 geht eine Direkt-Methanol-Brennstoffzelle (DMFC) mit einer Fluidtrennvorichtung hervor. Mit dieser Vorrichtung soll CO₂ von dem Fluid des Anodenausgangs getrennt werden, wobei die Verluste an Methanol möglichst gering gehalten werden sollen. Diese Fluidtrennvorrichtung weist eine obere und eine untere Kammer auf, die durch einen schwammartigen Trennkörper voneinander getrennt sind.

In der EP 1 050 086 B1 ist ein Verfahren und eine Vorrichtung zum Betreiben einer Direkt-Methanol-Brennstoffzellen dargestellt. Gemäß diesem Verfahren wird vorgeschlagen CO₂ als Trägergas zu verwenden.

In der DE 603 07 959 T2 ist eine Wasserstoffbrennstoffzelle mit einer Abgasbehandlungseinrichtung beschrieben. In der Abgasbehandlungseinrichtung wird aus der Brennstoffzelle abgeführtes Wasserstoffgas mit Kathoden-Abgas vermischt, um das Wasserstoffgas vor dem Ablassen an die Atmosphäre zu verdünnen. Die Brennstoffzelle weist einen Befeuchter auf, um den Wasserstoff und die Luft, welche in einen Brennstoffzellenstapel (Brennstoffzellenstack) eingespeist werden, zu befeuchten.

In der DE 10 2007 019 360 A1 ist ein Reformer zur Versorgung eines Brennstoffzellensystems beschrieben. Der Reformer erzeugt ein wasserstoffreiches Brenngas, insbesondere Wasserstoff, aus einem flüssigen Kraftstoff, z.B. Methanol, und aus einem Oxidatorgas, wie z.B. Luft.

Brennstoffzellensysteme, die mit kohlenstoffhaltigen Brennstoffen betrieben werden, nutzen einen Reformer um ein wasserstoffreiches Gas (Reformatgas) zu erzeugen. Sie unterscheiden sich insbesondere darin ob in dem Reformer eine partielle Oxidation von Kohlenstoff unter Abspaltung von Wasserstoff mittels unterstöchiometrischen Zugabe von Sauerstoff erfolgt oder ob über eine Dampfreformierung in der über eine Bereitstellung von Wasser ein wasserstoffreiches Gas erzeugt wird. Solches Reformatgas kann je nach Beschaffenheit, insbesondere je nach Kohlenmonoxidkonzentration einer Niedertemperatur oder Hochtemperatur PEMFC (proton exchange membran fuel cell), einer SOFC (solid oxide fuel cell), einer Schmelzcarbonat- oder einer Alkalischen Brennstoffzelle zugeführt werden. Um die Qualität des Reformatgases zu erhöhen, also insbesondere Kohlenmonoxidkonzentrationen und andere Verunreinigungen zu entfernen, kann das Reformatgas mit einer oder mehreren katalytischen Prozessstufen, wie beispielsweise Hoch- und Niedertemperatur Shiftstufen bzw. Nachreinigungsstufen, nachbehandelt werden. Wasserstoff kann aber auch mittels einer wasserstoffdurchlässigen Membran (beispielsweise aus einer Palladium Kupfer Legierung) dem Reformatgas entzogen werden.

Aus der WO 97/50140 geht eine Direktmethanelbrennstoffzelle (DMFC) mit einem Verdampfer hervor. Im Verdampfer werden die beiden Bestandteile, Wasser und Methanol, der Brennstofflösung über den Siedepunkt hinaus erhitzt und anschließend der Brennstoffzelle zugeführt. Über einen Regelmechanismus, der die belastungsmäßig gegebenen Vorgaben an Wasser-/Methanolkonzentration als Sollwert mit dem in der Leitung gegebenen Istwert des Gemisches vergleicht, werden zwei Dosierpumpen zum Zuführen von Wasser und Methanol eingestellt. Zum Messen des Istwertes ist ein Methanolsensor vorgesehen. Im Anodenkreislauf wird mittels eines CO₂-Abscheiders das entstandene CO₂ vom Abgas abgetrennt. Der darin enthaltene Brennstoff liegt dann in kondensierter Form vor und kann im Kreislauf geführt werden, d.h. in den Verdampfer eingeleitet werden. Ein Teil des abgetrennten CO₂ kann ebenfalls im Kreis geführt werden.

Es sind Brennstoffzellen, wie die DMFC bekannt, die mit Brennstofflösung betrieben werden. Die Verwendung eines flüssigen Brennstoffs ist Vorteilhaft, da er einfach mit hoher Energiedichte bevorratet werden kann. Jedoch ist die Betriebstemperatur derartiger Brennstoffzellen beschränkt, was nachteilig für deren Effizienz ist.

Direktmethanol-Brennstoffzellen mit gasförmiger Brennstoffversorgung sind, im Gegensatz zu denen, die flüssig versorgt werden, nicht in ihrer Betriebstemperatur beschränkt, weswegen ein höherer Wirkungsgrad pro Flächeneinheit der Anode erzielt werden kann. Die gasförmige Anodenversorgung ermöglicht auch einen Betrieb bei höheren Temperaturen von beispielsweise über 100°C. Können höhere Temperaturen in den Elektroden der Brennstoffzelle erreicht werden, ist die direkte Verstromung von mehrwertigen Kohlenwasserstoffen, wie beispielsweise Ethanol einfacher möglich. Vor allem sind höhere Temperaturen vorteilhaft, da sie eine höhere Leistungsdichte und einen höheren Wirkungsgrad der Brennstoffzelle ermöglichen.

Heutzutage können Brennstoffzellen, die mit einem kohlenstoffhaltigen Brennstoff betrieben werden, jedoch nur mit hohem technischen Aufwand bezüglich der Bereitstellung eines geeigneten Anodenfluids dargestellt werden, denn die Konzentration des Brennstoffs im Trägergas, d.h. dem Arbeits- oder Trägermedium, muss einerseits der Anforderung der ausreichenden Versorgung entsprechen, darf andererseits aber auch nicht zu hoch sein, da eine zu hohe Brennstoffkonzentration einen Brennstoffdurchbruch durch den Elektrolyten bewirken kann. Bei gasförmiger Versorgung der Anode der meisten Polymerelektrolyten, wie beispielsweise Nafion® ist ein deutlich höherer Anteil an Wasser als zur Anodenreaktion (CH₃OH + H₂O → CO₂ + 6H⁺ + 6e⁻) verbraucht wird notwendig, um den Methanoldurchbruch niedrig zu halten und eine Membranbefeuchtung zu erreichen.

Die bisher bekannte Technik zur Anodenversorgung von direktverstromenden Brennstoffzellen, mit verdampften Brennstoff, erfordert in der Regel mehr Rohrleitungen, die teilweise extra beheizt und isoliert werden müssen, sowie extra Kreisläufe zum Erhitzen der Verdampfer. Nachteilig an einer vollständigen Verdampfung eines Brennstoffgemisches ist auch, dass dabei brennbare Gase mit einem Überdruck entstehen was wiederum entsprechende Sicherheitstechnik erfordert. Diese Nachteile verhindern unter anderem maßgeblich eine Kommerzialisierung von Direktmethanol-Brennstoffzellen mit gasförmigem Anodenfluid.

Aus der JP 63-237363A geht eine Methanol-Brennstoffzelle hervor, welche als Brennstoff zur Stromerzeugung Wasser und Methanol in Gasphase verwendet. Der Brennstoff wird mittels eines Trägergases der Brennstoffzelle zugeführt, das Stickstoff ist. Dem Trägergas wird das Methanol und das Wasser durch Sprudeln des Stickstoffes durch eine flüssige Mischung aus Methanol und Wasser zugeführt. Methanol und Wasser liegen im Verhältnis 1:1 vor. Das Methanol-Wasser-Gemisch wird mit Hilfe von Stickstoff in Form von Dampf der Elektrode der Brennstoffzelle zugeführt. Anstelle von Stickstoff kann auch CO₂ als Trägergas verwendet werden.

Bei der Methanol-Brennstoffzelle nach der JP 63-237363A wird ein Trägergas durch ein flüssiges Gemisch aus Methanol und Wasser geleitet, wobei in dem Gemisch Methanol und Wasser im Verhältnis 1:1 vorliegt. Da der Dampfdruck von Methanol wesentlich höher als von Wasser ist, nimmt das Trägergas wesentlich mehr Methanol als Wasserdampf auf. Grundsätzlich sollte im Trägergas jedoch mehr Wasserdampf als Methanol enthalten sein, um einen Methanoldurchbruch an einer Membran der Brennstoffzelle möglichst zu vermeiden oder gering zu halten und um einen Elektrolyten der Brennstoffzelle zu befeuchten. Auch bei Brennstoffzellen mit Reformer soll Wasserdampf in stöchiometrischem Überschuss zu dem im Brennstoff enthaltenen Kohlenstoff zugeführt werden, wie es weiter unten näher erläutert wird. Bei der Methanol-Brennstoffzelle nach der JP 63-237363A werden somit die Dampfdrücke von Brennstoffdampf und Wasserdampf nicht berücksichtigt.

Die WO 2006/010012 A2 offenbart eine Brennstoffzelle, welcher ein Reformer vorgeschaltet ist, um Wasserstoff vom Brennstoff zu trennen und der Brennstoffzelle zuzuführen.

Aufgabe der vorliegenden Erfindung ist es daher Mittel und Verfahren bereitzustellen, die einen sehr einfachen, effizienten und kostengünstigen Betrieb einer Brennstoffzelle ermöglichen.

Die Aufgabe wird mit einer Befeuchtungseinheit nach Anspruch 1, mit einer Brennstoffzelleneinheit nach Anspruch 4 und einem Verfahren nach Anspruch 10 gelöst.

Nach einem ersten Aspekt der vorliegenden Erfindung ist eine Befeuchtungseinheit zum Bereitstellen eines Brennstoff enthaltenden Trägergases zur Versorgung einer Brennstoffzelle vorgesehen. Diese umfasst
einen Befeuchtungsraum, der zum Aufnehmen einer Brennstoff enthaltenden Flüssigkeit ausgebildet ist, einen in den Befeuchtungsraum mündenden Einlass zum Zuführen einer Brennstoff enthaltenden Flüssigkeit,
einen weiteren in den Befeuchtungsraum mündenden Einlass zum Zuführen eines Trägergases, derart, dass das Trägergas im Befeuchtungsraum mit der Flüssigkeit in Kontakt steht,
einen Auslass zum Ausgeben des gasförmigen Brennstoffenthaltenden Trägergases, wobei
eine Steuereinrichtung vorgesehen ist, die die Brennstoff enthaltende Flüssigkeit im Befeuchtungsraum auf einer Temperatur unterhalb ihres Siedepunkts einstellt. Die Steuereinrichtung zeichnet sich dadurch aus, dass sie derart ausgebildet ist, dass eine Regelung der Dampfdrücke von Brennstoff- und Wasserdampf durch Abstimmung von Brennstoffkonzentration und Temperatur der Brennstoff enthaltenden Flüssigkeit erfolgt.

Bei der vorliegenden Erfindung wird in der Befeuchtungseinheit die Flüssigkeit auf eine Temperatur unterhalb ihres Siedepunkts eingestellt. Hierdurch geht ein Teil der Flüssigkeit durch Verdunsten und nicht durch Verdampfen in die gasförmige Phase über und wird Bestandteil des Trägergases. Unter Verdampfen wird eine Erwärmung einer Flüssigkeit über ihren Siedepunkt verstanden. Gegenüber einer Verdampfung ist die Menge der Flüssigkeit (Brennstoff und/oder Wasser) die pro Zeiteinheit und Volumen des Trägergases pro Volumen durch Verdunsten aufgenommen wird geringer. Dieser Nachteil wird jedoch bewusst in Kauf genommen, da der Grad der Verdunstung sehr stark vom Sättigungsgrad der jeweiligen Flüssigkeitskomponente im Trägergas abhängt. Wenn das Trägergas von der Befeuchtungseinheit zur Brennstoffzelle im Kreislauf geführt wird, dann hängt der Anteil des Brennstoffes in dem von der Brennstoffzelle abgegebenen Trägergas vom Lastzustand der Brennstoffzelle ab. Bei geringer Last enthält das abgereicherte Trägergas mehr Brennstoff und bei hoher Last weniger Brennstoff. Ein Trägergas mit einem geringen Anteil von Brennstoff nimmt durch Verdunstung in der Befeuchtungseinheit ohne zusätzliche Regelmechanismen mehr Brennstoff auf als ein Trägergas, das bereits einen hohen Anteil an Brennstoff enthält.

Hierdurch kann die Dosierung des Brennstoffes mit sehr einfachen Mitteln exakt erfolgen. Es hat sich auch gezeigt, dass die Volumenströmung des Trägergases so eingestellt werden kann, dass die Brennstoffzelle ausreichend mit Brennstoff versorgt wird. Somit ist die Überführung des Brennstoffes mittels Verdunstung nicht nachteilig zur Verdampfung sondern weist bezüglich der Dosierung erhebliche Vorteile auf.

Die Führung des Trägergases im Kreislauf zwischen einer Befeuchtungseinheit und einer Brennstoffzelle, ohne dass dabei der Brennstoff aus dem von der Brennstoffzelle abgereicherten Trägergas auskondensiert wird, ist auch bei einer Anordnung mit Verdampfer an Stelle einer Befeuchtungseinheit verwendbar. Zur Dosierung müssen dann die aus dem Stand der Technik bekannten Mittel (siehe z.B. WO 97/50140), insbesondere Sensoren des Brennstoffs im angereicherten Trägergas eingesetzt werden. Durch die direkte Zuführung des abgereicherten Trägergases zum Verdampfer wird der im Trägergas verbliebene Brennstoff unmittelbar dem Verdampfer zugeführt, wodurch der Aufbau der gesamten Anordnung vereinfacht und Verluste durch eine zusätzliche Kondensation verringert werden. Alternativ kann das abgereicherte Trägergas ohne weitere Behandlung mit aus dem Verdampfer austretenden Brennstoff enthaltenden Gas gemischt und der Brennstoffzelle zugeführt werden. Die Führung des Trägergases im Kreislauf insbesondere direkt von der Brennstoffzelle zum Verdampfer bzw. zur Befeuchtungseinheit stellt einen eigenständigen Erfindungsgedanken dar.

Somit kann durch eine Steuerung der Temperatur und/oder der Konzentration der Brennstoff enthaltenden Flüssigkeit bzw. des Befeuchtungsraumes die Konzentration des Brennstoffes im Trägergas vor dem Eintritt in die Anode der Brennstoffzelle einfach und genau eingestellt und einfach gehalten werden.

Die Steuereinrichtung kann als elektronische Einrichtung oder als mechanisches Bauteil ausgebildet sein.

Die erfindungsgemäße Vorrichtung wird im Folgenden zumeist beispielhaft anhand einer DMFC beschrieben. Es können aber auch andere Brennstoffe als Methanol eingesetzt werden. Wenn von Methanol gesprochen sind grundsätzlich auch andere Brennstoffe vorgesehen.

Um ein Absenken der Konzentration im Trägergas zu vermeiden sollte immer etwas mehr Methanol als erforderlich zudosiert werden. Bei zu hohen Konzentrationen bricht Methanol durch bzw. kann über den Abgasauslass entweichen. Hierbei kann die Verwendung eines katalytischen Brenners zur Abgasreinigung vorteilhaft sein.

Prinzipiell kann gemäß der vorliegenden Erfindung auf einen Methanolsensor verzichtet werden. Gemäß einer Ausführungsform der vorliegenden Erfindung kann ein Sensor zur Konzentrationsmessung der Brennstoff enthaltenden Flüssigkeit in der Befeuchtungskammer vorgesehen sein. Diese ist grundsätzlich aber nicht erforderlich. Anhand der Daten des Sensors kann die Zudosierung des Brennstoffes genauer erfolgen; wodurch sich die Verluste verringern würden. Eine derartige Konzentrationsmessung in der Flüssigkeit ist im Vergleich zu einer Konzentrationsmessung in der heißen Gasphase technisch leichter realisierbar.

Mit der erfindungsgemäßen Vorrichtung kann der Brennstoffanteil im Trägergas niedrig und der Wasseranteil hoch gehalten werden ohne dass aufwändige und teure Kondensationsvorrichtungen, wie z.B. Brennstoff- und/oder und Wasserabscheider, erforderlich sind. Das ist insbesondere beim Betrieb von Brennstoffzellen vorteilhaft die viel Wasser zur Befeuchtung brauchen aber nur wenig Methanol vertragen, da sonst zuviel Methanol unverstromt durch die Membran hindurchbrechen würde.

Weiterhin ist vorteilhaft, dass das Trägergas nicht auf Überdruck gebracht werden muss. Die hierfür notwendigen Bauteile können somit ebenfalls entfallen.

In dem Befeuchtungsraum befindet sich eine Mindestmenge an Brennstoff enthaltender Flüssigkeit. Diese ist so groß, dass auch bei einer pulsierenden Brennstoffzuführung die Konzentrationsschwankungen gering sind, d.h. dass die Konzentrationsabweichung in der Brennstoff enthaltenden Flüssigkeit beispielsweise weniger als 5-10% beträgt. Hierdurch können für die Zudosierung günstige Pumpen wie herkömmliche Membran-, Zahnrad- oder Kolbenpumpen verwendet werden.

Die Erfindung ermöglicht es somit die Vorteile, die ein Betriebsreservoir mit flüssiger Brennstofflösung im Anodenkreislauf aufweist, insbesondere die einfach zu realisierende und kostengünstige Brennstoffzudosierung, für den gasförmigen Betrieb nutzbar zu machen. Risiken, die sich durch die Erzeugung eines verdampften Brennstoffs ergeben, werden dabei zusätzlich verringert.

Die Konzentration des mit Brennstoffangereicherten Trägergases stellt sich aufgrund einer vorgegebenen Betriebstemperatur in der Befeuchtungseinheit aufgrund der Sättigung bzw. der Dampfdruckkurve des Trägergases nahezu von selbst ein. Das Dampfdruckgleichgewicht ist von der Konzentration der Brennstoff enthaltenden Flüssigkeit und von der Temperatur in der Befeuchtungseinheit abhängig. Somit lassen sich über die Temperatur und die Konzentration des Brennstoffs der wässrigen Lösung die Konzentration des gasförmigen Brennstoffs und Wassers im Versorgungsfluid für die Anode bzw. im angereicherten Trägergas einstellen.

Weiterhin kann eine Brennstoffzelle mit höherer Temperatur, als bei Brennstoffzellen mit flüssiger Brennstoffversorgung üblich, betrieben werden, was zu einer höheren Effizienz führt.

Der Brennstoff kann sicher und mit hoher Energiedichte in flüssiger Form gelagert werden.

Der Aufbau der erfindungsgemäßen Vorrichtung ist einfach, da der Brennstoff nicht über seinen Siedepunkt erwärmt werden muss.

Weiterhin sind keine teuren und energiaufwendigen Wärmetauscher und/oder Kondensatoren, um Wasser, Brennstoff und CO₂ nach dem Austritt aus der Anode zu trennen erforderlich.

Bei der vorliegenden Erfindung ist keine Energie erforderlich, um Brennstoff und oder Wasser über den Siedepunkt zu erhitzen. Die Heizeinrichtung wird vorzugsweise mit der Abwärme der Brennstoffzelle mit Energie versorgt.

Die Konzentration des Brennstoff enthaltenden Trägergases ist einfach und zuverlässig ohne aufwendige Methanolsensoren und Regelmechanismen einstellbar.

Nach einem zweiten Aspekt der erfindungsgemäßen Vorrichtung ist eine Brennstoffzelleneinheit mit einer Befeuchtungseinheit vorgesehen. Diese Brennstoffzelleneinheit umfasst
eine Brennstoffzelle mit einem Eingang zum Zuführen von mit Brennstoff angereichertem Trägergas und einem Ausgang zum Ableiten des vom Brennstoff abbgereicherten Trägergases, wobei der Ausgang direkt mit dem Einlass zum Zuführen des Trägergases der Befeuchtungseinheit verbunden ist.

Gemäß dem zweiten Aspekt der vorliegenden Erfindung ist zumindest ein Teilstrom des abgereicherten Trägergases wieder direkt der Brennstoffzelle zuführbar. Brennstoffdampf und Wasserdampf werden gemäß dem Stand der Technik mithilfe eines oder mehrerer Kondensatoren nach Passieren des Anodenraumes vollständig aus einem Trägergas auskondensiert und somit von der Kohlendioxidphase vollständig getrennt. Dieses Verfahren erfordert entsprechend ausgelegte Kondensatoren und Wärmetauscher. Diese Kondensatoren und Wärmetauscher sind gemäß der vorliegenden Erfindung nicht zwingend erforderlich, da das abgereicherte Trägergas direkt der Befeuchtungseinheit zuführbar ist.

In der Befeuchtungseinheit kann im Bereich der Brennstofflösung eine Vorrichtung zur Aufbereitung oder Reinigung der Brennstofflösung integriert sein.

Gemäß einem erfindungsgemäßen Verfahren zum Bereitstellen eines Brennstoff enthaltenden Trägergases wird in einer Befeuchtungseinheit, welche teilweise mit einer Brennstoff enthaltenden Flüssigkeit gefüllt ist,
die Brennstoffenthaltende Flüssigkeit auf einer Temperatur unterhalb ihres Siedepunkts gehalten, und das Trägergas im Befeuchtungsraum mit der Flüssigkeit in Kontakt gebracht, wodurch das Trägergas mit dem Brennstoffangereichert, und
das mit Brennstoff angereicherte Trägergas bereitgestellt.

Nach einem weiteren Aspekt des erfindungsgemäßen Verfahrens zur Versorgung einer Brennstoffzelle mit einem Brennstoff enthaltendem Trägergas unter Verwendung eines Verfahrens zum Bereitstellen eines Brennstoff enthaltenden Trägergases wird das gasförmige Brennstoff enthaltende Trägergas der Brennstoffzelle zugeführt und zumindest ein Teil des in der Brennstoffzelle abgereicherten gasförmigen Trägergases von der Brennstoffzelle direkt der Befeuchtungseinheit als Trägergas zugeführt, so dass das Brennstoff enthaltende Trägergas in einem Kreislauf zwischen der Brennstoffzelle und der Befeuchtungseinheit geführt wird.

Da in der Brennstoffzelle aufgrund der darin ablaufenden Reaktionen die Gasmenge etwas zunimmt kann nicht das gesamte abgereicherte Trägergas im Kreislauf geführt werden. Ein geringer Anteil wird abgezweigt, und einer Behandlung zum Trennen des darin enthaltenen Brennstoffs vom Trägergas unterzogen. Dies erfolgt beispielsweise mittels einer Wäsche wie es unten näher erläutert wird. Da nur ein kleiner Volumenstrom behandelt werden muss, können die Trenneinrichtungen entsprechend klein ausgebildet sein.

Nach einem weiteren Aspekt des erfindungsgemäßen Verfahrens wird ein Kathodenabgas der Brennstoffzelle in zwei Teilströme aufgeteilt, wobei einer der Teilströme das System ungekühlt verlässt und der andere der Teilströme mittels eines Wärmetauschers gekühlt wird und das bei der Kühlung entstehende Kondensat des anderen Teilstromes der Befeuchtungseinheit direkt oder einer separaten Kammer innerhalb der Befeuchtungseinheit zum Auffangen des Kondensats zugeführt wird.

Dieser Aspekt des erfindungsgemäßen Verfahrens stellt einen eigenständigen Erfindungsgedanken da, der generell auf verschiedenen Brennstoffzellentypen anwendbar ist.

Nach einem weiteren Aspekt des erfindungsgemäße Verfahrens zur Versorgung einer Brennstoffzelle mit einem gasförmigen Brennstoff enthaltendem Fluid, wird das Fluid in einem Kreislauf zwischen der Brennstoffzelle und einer Befeuchtungseinheit, welche teilweise mit einer Brennstoff enthaltenden Flüssigkeit gefüllt ist, geführt. Hierbei wird das gasförmige Fluid über Mittel zum Anreichern des gasförmigen Fluids mit der Brennstoff enthaltenden Flüssigkeit in Kontakt gebracht.

Im Folgenden werden weitere vorteilhafte Ausgestaltungen des erfindungsgemäßen Verfahrens aufgeführt.

Der Befeuchtungseinheit kann gasförmiges Fluid entnommen werden, wobei das gasförmige Fluid mit Luft vermischt wird und einem katalytischen Brenner oder einer Brennstoffzellenanode oder einer Brennstoffzellenkathode zugeführt wird. Dabei kann Luft in die Befeuchtungskammer eingelassen werden.

Weiterhin kann das gasförmige Fluid durch Einleiten in die Brennstoff enthaltende Flüssigkeit mit dieser über Mittel zur Anreicherung mit Dämpfen bzw. Brennstoff, wie beispielsweise Befeuchtungskörper, in Kontakt gebracht werden.

Das gasförmige Fluid kann über eine Einrichtung zum Anreichern des Trägergases, wie z.B. einen oder mehrere Befeuchtungskörper mit der Brennstoff enthaltenden Flüssigkeit in Kontakt gebracht werden.

Die Steuerung der Mengenverhältnisse der beiden Kathodenabgasteilströme kann in Abhängigkeit eines Messsignals eines Füllstandssensors, der sich in der Befeuchtungseinheit oder in der Kondensatauffangkammer befindet, erfolgen.

An der Anodenseite der Brennstoffzelle kann ein Überdruck der niedriger als 1500 mbar, insbesondere niedriger als 1000 mbar und vorzugsweise niedriger als 800 mbar ist vorliegen. In der Befeuchtungseineheit kann ein Unterdruck von 100 mbar und geringer und ein Überdruck von maximal 1000 mbar gegenüber der Umgebung vorliegen.

Das Fluid kann Wasserdampf enthalten, wobei eine Regelung der Dampfdrücke von Brennstoff- und Wasserdampf durch Abstimmung von Brennstoffkonzentration und Temperatur der Brennstofflösung erfolgt.

Die Steuerung der Zudosiermenge des Brennstoffs aus einem Brennstofftank in die Befeuchtungseinheit oder der Konzentration des Brennstoffs in der Brennstoff enthaltenden Flüssigkeit kann auf der Basis mindestens eines der folgenden Parameter erfolgen: Temperatur der Brennstoff enthaltenden Flüssigkeit, Regelgröße die von der Stromstärke Brennstoffzellenstacks ableitbar ist, Temperatur der Brennstoffzelle bzw. des Brennstoffzellenstacks, Füllstandshöhe der Brennstoff enthaltenden Flüssigkeit, Konzentration des Brennstoffs in der Brennstoff enthaltenden Flüssigkeit.

Obiges erfindungsgemäßes Verfahren kann auch dadurch beschrieben werden, dass die Brennstoffzelle der Brennstoffzelleneinheit eine Anode, eine Kathode und ein Elektrolytsystem aufweist, dabei wird einer Anodenseite der Brennstoffzelle ein mit Brennstoff angereichertes Trägergas zugeführt, das Kohlendioxid, Brennstoffdampf und Wasserdampf umfasst und dessen Temperatur unter der Siedetemperatur des Brennstoffes oder einer wässrigen Lösung des Brennstoffes liegt. Dieses Verfahren kann für verschieden Arten von PEMFC eingesetzt werden. Der Elektrolyt kann je nach Brennstoffzellentyp bzw. Art des Brennstoffs und Betriebstemperatur angepasst sein. Im Bereich der Nieder- und Mitteltemperatur PEMFC (40-130°C Betriebstemperatur) sind unter anderem fluorierte Polymere mit Sulfonsäuregruppen, sulfonierte Potycarbonat/Hydrocarbon-Systeme, sowie Polyetheretherketon (PEEK) mit Sulfonsäuregruppen geeignet. Ferner kann dieses Verfahren auch in Hochtemperatursystemen mit einer Festoxidbrennstoffzelle (SOFC, solid oxide fuel cell) oder einer Schmelzcarbonatbrennstoffzelle (MCFC, molton carbonate fuel cell) angewendet werden.

Durch die Möglichkeit einer einfacheren und energiesparenden Erzeugung eines geeigneten gasförmigem Anodenfluids kann eine wirtschaftliche Nutzung von direktverstromenden Brennstoffzellen oder von Brennstoffzellensysteme mit Reformer umgesetzt werden. Dies betrifft auch insbesondere Brennstoffzellen, deren Elektrolyt auf der Basis von Phosphorsäure ionisch leitfähig ist, denn diese können in den meisten Fällen nicht mit flüssiger Methanollösung oder anderen Brennstofflösungen betrieben werden, da Phosphorsäure bei Kontakt mit flüssigem Wasser oder Brennstofflösungen aus der Trägermatrix herausgelöst wird.

Allgemein dient die Erfindung dazu, den Betrieb von Brennstoffzellen mit gasförmigen Reaktanden zu realisieren und dadurch eine effizientere Verstromung von organischen Brennstoffen durch höhere Betriebstemperaturen der Brennstoffzellen mit geringem Aufwand an Komponenten zu ermöglichen. Nachteile von Brennstoffzellen mit flüssigem Anodenfluid, wie die Zweiphasenströmung in den Versorgungs- bzw Zuführungsräumen der Elektroden sowie die hohe Wasserdiffusion zur Kathode, können durch die erfindungsgemäß ermöglichte gasförmige Anodenversorgung ebenfalls vermieden werden.

Wenn im Folgenden von Brennstoffzellen die Rede ist, so umfassen solche Brennstoffzellen sowohl zweidimensional als auch dreidimensional aufgebaute Brennstoffzellen, d.h. Flachzellen als auch sogenannte Brennstoffzellenstacks.

Eine erfindungsgemäße Brennstoffzelleneinheit gemäß einer Ausführungsform weist folgendes auf: eine Brennstoffzelle mit einer Anodenseite sowie einer Kathodenseite, eine Befeuchtungseinheit, welche ein Befeuchtungsraum mit Brennstofflösung begenzt, mit einem Einlass für eine Brennstoff enthaltende Flüssigkeit, sowie einem Einlass und einem Auslass für ein gasförmiges Fluid, sowie eine Rohrleitung, welche den Einlass der Befeuchtungseinheit mit der Anodenseite der Brennstoffzelle verbindet, und eine Rohrleitung, welche den Auslass der Befeuchtungseinheit mit der Anodenseite der Brennstoffzelle verbindet, wobei eine Fördereinrichtung vorgesehen ist, welche dazu ausgelegt ist, das gasförmige Fluid im Kreislauf zwischen der Anodenseite der Brennstoffzelle und der Befeuchtungseinheit zu führen.

Zudem ist eine Steuer- oder Regeleinrichtung vorhanden, die zur Regulierung von Betriebsparametern der Befeuchtungseinheit so ausgelegt ist, dass die Brennstoff enthaltende Flüssigkeit in der Befeuchtungseinheit in flüssigem Zustand bei einer geeigneten Temperatur gehalten wird. Darüber hinaus sind Mittel zum Anreichern des gasförmigen Fluids mit in der Flüssigkeit enthaltenem Brennstoff vorhanden.

Kernstück der erfindungsgemäßen Brennstoffzelleneinheit ist die Befeuchtungseinheit, welche einen Befeuchtungsraum begrenzt, der dafür ausgelegt ist, bis zu einer gewissen Höhe mit einer Brennstoff enthaltenden Flüssigkeit gefüllt zu sein. Die Betriebsparameter innerhalb der Befeuchtungseinheit, d.h. z.B. Druck und Temperatur, sind so zu halten, dass ein geeigneter Dampfdruck über der Flüssigkeit vorliegt. Der Siedepunkt der Brennstoff enthaltenden Flüssigkeit darf dabei nicht überschritten werden und die Flüssigkeit soll außerdem nicht vollständig verdunsten. Dies kann sowohl in Form einer Steuerung als auch einer selbsttätigen Regelung erfolgen, auf die in den Ausführungsbeispielen noch näher eingegangen wird. Auf diese Weise kann das Trägergas bzw. das gasförmige Fluid, das ein Anodenfluid bildet, über die Brennstoff enthaltende Flüssigkeit mit Brennstoff angereichert und der Anode zur Brennstoffversorgung zugeführt werden. Es wird somit ein Anodenfluidkreislauf gebildet.

Kohlendioxid wird üblicherweise in der Anodenreaktion gebildet, wenn Methanol oder andere kohlenstoffhaltige Brennstoffe direkt an der Anode oxidiert werden. Das gegenüber der Anodenreaktion inerte Kohlendioxid eignet sich als Trägergas für die erforderliche Brennstoff- und Wasserdampfmenge. Ein für eine gasförmige Direktmethanol-Brennstoffzelle geeignetes Anodenfluid ist also eine Mischung aus Kohlendioxid, Wasserdampf und Methanoldampf, wobei im Betrieb zu geringeren Teilen auch andere Reaktionszwischenprodukte der Methanoloxidation sowie Inertgase im Anodenfluid zu finden sind.

Neben Kohlendioxid können aber auch andere geeignete Reaktionsprodukte als Trägergas verwendet werden. Ferner können auch andere Gase wie beispielsweise Stickstoff als Trägergas dem System zugeführt werden.

Durch die Anodenreaktion werden die über das Trägergas zugeführte Energieträger, d.h. der Brennstoff oder die Brennstoffmischung, und Wasser verbraucht und aus dem Trägergas abgereichert. Daher müssen diese Stoffe in das Anodenfluid hinein nachgeliefert werden.

Das Anodenfluid wird im Kreislauf gefördert und durch die Befeuchtungseinheit mit Dampf des in einer wässerigen Lösung vorliegenden Brennstoffs angereichert. Die Befeuchtungseinheit befindet sich dabei im Kreislauf des Anodenstroms, d.h. sie ist in diesen integriert. Folglich ist ein Einlass und ein Auslas für das Anodenfluid vorgesehen. In den Einlass strömt jenes Anodenfluid, das, nachdem es den Anodenraum der Brennstoffzelle passiert hat, nicht ausgestoßen wurde, sondern im Anodenkreislauf verbleibt. Durch den Auslass strömt das wieder mit Dämpfen der Brennstofflösung angereicherte Anodenfluid zur Anode der Brennstoffzelle.

Bei Verwendung eines Reformers wird das mit Brennstoff angereicherte Trägergas einem Reformerraum anstelle des Anodenraumes zugeführt.

Die Anreicherung findet mittels eines Reservoirs mit Brennstofflösung, das im Folgenden als Betriebsreservoir bezeichnet wird, in der Befeuchtungseinheit statt. In dem Betriebsreservoir befindet sich eine Mindestmenge an Brennstofflösung. Diese ist so groß, dass auch bei einer pulsierenden Brennstoffzuführung die Konzentrationsschwankungen gering sind, d.h. dass die Konzentrationsabweichung beispielsweise weniger als 5-8% beträgt.

Die Anreicherung des Trägergases in der Befeuchtungseinheit basiert auf dem Prinzip der Verdunstung. Unter Verdunstung oder Befeuchtung wird im Rahmen dieser Erfindungsbeschreibung eine Anreicherung eines Gases mit in die Gasphase überführten Teilchen einer Flüssigkeit, deren Temperatur unterhalb der Siedetemperatur liegt, verstanden. Das Trägergas wird mit dampfförmigem Wasser und Brennstoff aus einer Brennstoff enthaltenden Flüssigkeit befeuchtet.

Die Anreicherung des gasförmigen Fluids bzw. des Trägergases kann dabei auf mehrere Arten erfolgen. Gemäß einer Ausführungsform kann die Einrichtung zur Anreicherung des Trägergases bzw. das Mittel zum Anreichern des gasförmigen Fluids eine Rohrleitung aufweisen, welche den Einlass in Richtung des Bodens der Befeuchtungseinheit verlängert und welche in einem dem Einlass der Befeuchtungseinheit fernen Endbereich eine Anzahl an Öffnungen für den Austritt des gasförmigen Fluids aus der Rohrleitung in die Flüssigkeit aufweist. Mit anderen Worten ragt die Rohrleitung in den von der Befeuchtungseinheit begrenzten Befeuchtungsraum hinein, so dass sie mit einem Ende, welches mit einer oder mehreren Öffnungen versehen ist, in die in dem Befeuchtungsraum befindliche Brennstoff enthaltende Flüssigkeit eintaucht. D.h. der mit der Anzahl von Öffnungen versehene Endbereich der Rohrleitung befindet sich in der Region eines bodennahen Bereichs der Befeuchtungseinheit, um von der Brennstoff enthaltenden Flüssigkeit bedeckt zu sein. Gemäß einer einfachen Variante dieser Ausführungsform kann die Rohrleitung auch dadurch ersetzt werden, dass sich der Einlass für das gasförmige Fluid in die Befeuchtungseinheit im bodennahen Bereich befindet, der im Gebrauch von der Brennstoff enthaltenden Flüssigkeit bedeckt ist.

Das gasförmige Fluid des Anodenfluidkreislaufs tritt durch die eine oder mehrere Öffnungen in den mit Flüssigkeit gefüllten Bereich des Befeuchtungsraumes ein und steigt als Bläschen durch die Flüssigkeit nach oben, wobei es mit Brennstoff angereichert wird. Anschließend tritt das so angereicherte Fluid über den Auslass aus der Befeuchtungseinheit aus und kann der Anode der Brennstoffzelle zugeführt werden.

Der Durchmesser der einen oder mehreren Öffnungen kann beispielsweise im Bereich von 0,05 und 5,0 mm liegen. Die Kleinheit der Öffnungen bewirkt, dass die gebildeten Bläschen ebenfalls von geringem Durchmesser sind und somit das für die Aufnahme des Brennstoffes wesentliche Verhältnis von Oberfläche zu Volumen günstig ist. Selbstverständlich können je nach Einsatzbedingungen auch größere oder kleinere Öffnungen gewählt werden. Es kann von Vorteil sein, wenn der Durchmesser der Öffnungen variabel einstellbar ist.

Gemäß einer alternativen Ausführungsform erfolgt die Brennstoffanreicherung des gasförmigen Fluids im Befeuchtungsraum mithilfe von festen Körpern, die den Kontakt zwischen der Brennstoff enthaltenden Flüssigkeit und dem gasförmigen Fluid vermitteln. Hierzu weisen die Mittel zum Anreichern des gasförmigen Fluids mindestens einen Befeuchtungskörper auf, welcher dafür ausgelegt ist, mit der Brennstoff enthaltenden Flüssigkeit in Kontakt zu stehen und mit einem Oberflächenbereich aus der Flüssigkeit herauszuragen. Mit anderen Worten ist der mindestens eine Befeuchtungskörper so im Befeuchtungsraum angeordnet, dass sich ein Teil desselben in einem Bereich befindet, der im Gebrauch mit Flüssigkeit bedeckt ist (z.B. ein bodennaher Bereich) und sich ein anderer Teil im einem Bereich des Befeuchtungsraums befindet, welcher dafür ausgelegt ist, beim Gebrauch nicht von der Flüssigkeit bedeckt zu sein. Der Befeuchtungskörper erweitert somit die Kontaktoberfläche zwischen dem gasförmigen Fluid und der Brennstoff enthaltenden Flüssigkeit im Inneren der Befeuchtungseinheit.

Zu diesem Zweck kann der Befeuchtungskörper beispielsweise dafür ausgelegt sein, dass die Brennstoff enthaltende Flüssigkeit mittels Kapillarwirkung und/oder Hydrophilizität zu dem Oberflächenbereich transportiert wird. Der Befeuchtungskörper kann demzufolge beispielsweise als ein poröser Körper ausgebildet sein. Zur Erhöhung der Kontaktoberfläche können auch mehrere Körper vorhanden sein.

Andere Formen der Befeuchtung können mithilfe einer Vorrichtung, welche die Brennstofflösung in den oberen Teil der Befeuchtungskammer befördert, z.B. einer Pumpe, realisiert werden. Bei einer möglichen Ausführungsform wird dabei mithilfe einer geeigneten Vorrichtung bzw. einer Sprenkeleinrichtung, wie beispielsweise einer Düse. Brennstofflösung in den Gasraum eingeperlt oder eingesprüht. Dieses Verfahren ermöglicht eine hohe Oberfläche der Flüssigkeit, welche für hohe Befeuchtungsraten geeignet ist. Durch den Kontakt der Tröpfchen mit dem abgereicherten gasförmige Anodenfluid, welches durch die Befeuchtungseinheit strömt, wird das Anodenfluid befeuchtet und dadurch wieder mit Brennstoff und bzw. Wasser angereichert.

Eine andere Ausführungsform nutzt den Einsatz von porösen Körpern. Ein oder mehrerer dieser Körper wird von oben befeuchtet. Durch den befeuchteten Körper wird das gasförmige Anodenfluid geleitet, das dabei Brennstoffdampf aufnimmt. Hierfür kann eine weitere Fördereinrichtung erforderlich sein, welche dafür ausgelegt ist, Brennstofflösung auf den oder durch den porösen Befeuchtungskörper zu befördern. Vorteilhaft ist es wenn die Fließrichtung der Brennstofflösung im porösen Körper entgegengesetzt zur Strömung des Anodengases ist.

Gemäß speziellen Ausführungsformen der Erfindung kann eine Einrichtung vorhanden sein, um Brennstoff aus überschüssigem gasförmigen Fluid bzw. aus dem abgereicherten Trägergas auszuwaschen oder zu kondensieren. Bei diesem überschüssigen Fluid handelt es sich um jene Menge an Gas (üblicherweise Kohlendioxid), welches von der Brennstoffzelle zusätzlich produziert wird und im Anodenkreislauf nicht mehr für den Brennstofftransport benötigt wird. Für die Auswaschung wird eine Flüssigkeit wie z.B. Wasser verwendet, wobei es sich um das beim Betrieb der Brennstoffzelle kondensierbare Kathodenwasser handeln kann. Gemäß den nachfolgend beschriebenen Ausführungsformen kann die Auswaschung direkt in einem separaten Bereich der Befeuchtungseinheit stattfinden. Gemäß einer Alternative kann das Auswaschen natürlich auch in einer von der Befeuchtungseinheit getrennten Einheit stattfinden. Die Auswaschung dient der Rückführung des im überschüssigen Fluid des Anodenkreislaufs enthaltenen Brennstoffs in den Anodenkreislauf und der Ausscheidung des brennstofflosen oder brennstoffarmen überschüssigen Fluids.

Bei einer Ausführungsform ist zur Waschung des überschüssigen Fluids eine separate Kammer innerhalb der Befeuchtungseinheit vorhanden, welche einen Kondensatauffangraum begrenzt und einen weiteren Einlass für ein gasförmiges Fluid, einen weiteren Einlass für eine Flüssigkeit und eine Abgasauslassöffnung aufweist. Durch den weiteren Einlass für ein gasförmiges Fluid wird überschüssiges Anodenfluid in die Kammer zur Waschung eingeleitet. Der weitere Einlass für eine Flüssigkeit dient der Zufuhr von Waschflüssigkeit und über die Abgasauslassöffnung wird das an Brennstoff abgereicherte überschüssige Anodenfluid nach außen abgeleitet.

Der Kondensatauffangraum kann beispielsweise über einen Kanal oder einer Blende oder ein Ventil mit einem Durchmesser zwischen 0,05 mm bis 4 mm mit dem Befeuchtungsraum in Verbindung stehen. Die Enge des Kanals verhindert dabei, dass Brennstoff enthaltende Flüssigkeit aus dem Befeuchtungsraum in die separate Kammer tritt.

Die separate Kammer bzw. der Kondensatauffangraum kann auch über ein Überlaufrohr oder einen Siphon mit dem Befeuchtungsraum in Verbindung stehen.

Die separate Kammer kann vorzugsweise gegenüber der übrigen Befeuchtungseinheit thermisch isoliert sein. Auf diese Weise wird sichergestellt, dass die für die Prozesse der Auswaschung des überschüssigen Brennstoffes auf der einen Seite und der Anreicherung des gasförmigen Fluids mit Brennstoff optimalen Betriebsbedingungen unabhängig voneinander eingestellt werden können.

Die Befeuchtungseinheit kann auch im mehrere Kammern unterteilt sein.

Um verdunsteten Brennstoff von einem Brennstoffspeicher in die Befeuchtungseinheit zu fördern muss bei konstanter Leistungsabgabe der Brennstoffzelle, bzw. konstantem Brennstoffverbrauch, genau jene Menge aus einem Brennstoffspeicher in die Befeuchtungseinheit nachgeliefert werden, die verbraucht wurde. Zu diesem Zweck der Zuführung von Brennstoff sollte eine exakte Fördereinrichtung bzw. Pumpe verwendet werden. Dem Ideal einer reproduzierbaren und damit einstellbaren Fördermenge kommen Pumpen mit einem definiertem Fördervolumen bzw. einer konstanten Fördermenge pro Pumpenhub oder pro Umdrehung durch einen Antriebsmotor nahe, wie beispielsweise kleine Kolbenpumpen oder Membranpumpen oder Zahnradpumpen.

Durch das Betriebsreservoir, das eine geeignete Menge an Methanollösung enthält, wird eine diskontinuierliche Zudosierung von Methanol abgepuffert. Beispielsweise könnte bei einem System mit einer Brennstoffzellenleistung von 250 Watt (und mit einem Betriebsreservoir mit einem Volumen von 500 ml eine diskontinuierliche Dosierung mit einer Menge von 1,44 ml Methanol alle 30 Sekunden erfolgen wobei bei einer volumetrischen Durchschnittskonzentration von 25% Methanol die Konzentrationsschwankungen im Anodenfluid unter 4% liegen. Dagegen würde bei einer kontinuierlichen Zudosierung (Verdampferprinzip) eine Menge bzw. Volumenstrom von ca. 0,048 ml Methanol pro Sekunde einem Verdampfer zugeführt werden, was genauere und wesentlich aufwendigere Pumpen erfordert.

Um eine Fehldosierung zu vermeiden ist es zweckmäßig den Brennstoff in der Zuleitung zur Dosiereinrichtung blasenfrei zu halten. Dazu können entsprechend geeignete Blasenabscheider eingesetzt werden. Zur Entgasung des Blasenabscheiders kann eine Verbindung zwischen Blasenabscheider und Befeuchtungseinheit bestehen. Manchen Pumpen sind hinsichtlich ihrer Fördermenge anfällig für Schwingungen bzw. einer Beeinflussung ihrer Eigenschwingung. Daher ist eine mechanische Entkopplung der Pumpe bezüglich Schwingungen oft vorteilhaft.

Gemäß einem erfindungsgemäßen Verfahren zur Versorgung einer Brennstoffzelle mit einem gasförmigen Brennstoff enthaltendem Fluid, wird das Fluid in einem Kreislauf zwischen der Brennstoffzelle und einer Befeuchtungseinheit, welche teilweise mit einer Brennstoff enthaltenden Flüssigkeit gefüllt ist, geführt, wobei das gasförmige Fluid über Mittel zum Anreichern des gasförmigen Fluids mit der Brennstoff enthaltenden Flüssigkeit in Kontakt gebracht wird. Dabei kann das Inkontaktbringen des gasförmigen Fluids durch Einleiten in die Brennstoff enthaltende Flüssigkeit erfolgen. Gemäß einer Alternative wird das gasförmige Fluid über einen oder mehrere Befeuchtungskörper mit der Brennstoff enthaltenden Flüssigkeit in Kontakt gebracht.

Die Erfindung soll im Folgenden im Wesentlichen an einer Direktmethanol-Brennstoffzelleneinheit beispielhaft erklärt werden, wobei natürlich statt Methanol auch andere kohlenstoffhaltige Brennstoffe bzw. Brennstoffmischungen wie beispielsweise Ethanol oder Karbonsäuren eingesetzt werden können.

Bei der Direktmethanolbrennstoffzelle wird an der Anode Methanol durch Sauerstoff, der aus Wasser mittels des Katalysators Ruthenium über OH- Ionen gewonnen wird, zu CO₂ oxidiert. Am Anodenkatalysator werden Brennstoff und Wasser verbraucht und freie Protonen, Elektronen sowie das Reaktionsprodukt CO₂ erzeugt. Die erzeugten Protonen gelangen über den Elektrolyten zur Kathode. Elektrolyte, die aufgrund von Sulfonsäuregruppen protonenleitend sind, weisen eine für die Zwecke der Brennstoffzelle ausreichende Protonenleitfähigkeit erst ab einer ausreichenden Befeuchtung auf. Wasser ist daher im Anodenfluid d.h. dem gasförmigen Fluid, das der Anode der Brennstoffzelle für die Brennstoffversorgung zugeführt wird, neben seiner Funktion als Reaktand auch meist zur Befeuchtung des Elektrolyts zweckmäßig.

Wie beschrieben kann die Ausführung der Befeuchtung verschieden gestaltet sein. Durch das Prinzip, der Befeuchtung durch den Eintrag des Anodenfluids in Form von Gasblasen in die Brennstofflösung kann vor allem über die Temperatur der Brennstofflösung, aber auch über die Größe der Ausströmöffnungen, deren Anzahl und Eintauchtiefe in die Brennstofflösung die Höhe des Befeuchtungsgrades sowie des Druckes im Anodenraum beeinflusst werden. Entsprechend können diese Betriebsparameter für eine Steuerung oder Regelung des Verfahrens eingesetzt werden.

Eine weitere Form der Befeuchtung basiert wie beschrieben auf der Verdunstung von Brennstoff und Wasser, die durch den Kontakt des Trägergases mit einer vergrößerten Oberfläche der Brennstofflösung ermöglicht wird. Hierfür werden Körper aus Stoffen, die sich gut mit der Brennstofflösung benetzen lassen, wie Gewebe, Polymerschäume oder poröse Keramiken eingesetzt (wie zum Beispiel Melaminschaum, Polyuretanschaum, Siliziumcarbidkeramik oder Metalloxidkeramiken). Es können aber auch hydrophile Membranen verwendet werden. Die Befeuchtungskörper befinden sich teilweise in der flüssigen Phase der Brennstofflösung aber auch in der Gasphase. Durch die Temperatur, die Anströmfläche, die Art des Materials der Befeuchtungskörper und der Kontaktzeit des Trägergases mit der feuchten Oberfläche, kann der Feuchtegrad des Betriebsgases eingestellt werden.

Die Befeuchtungskörper können so angeordnet werden, dass sie in Abhängigkeit vom Füllstand im Befeuchtungsraum befeuchtet werden und/oder bei niedrigeren Füllhöhen keinen Kontakt mit der Flüssigkeit haben. Dadurch regelt sich der Grad an Befeuchtung des Betriebsgases über die Füllhöhe des Betriebsreservoir automatisch. Diese selbstregelnde Befeuchtung führt bei niedrigen Brennstofffüllhöhen zu einer Verringerung des Wasserpartialdrucks im Anodenfluid und an der Anode. Dies erhöht die Diffusion des Produktwassers von der Kathode zur Anode bzw. vermindert die Diffusion von der Anode zur Kathode. Der verringerte Wasserpartialdruck am Eingang der Anodenraums führt bei geeigneten Elektrolyten zu einem Anstieg des Wasserpartialdrucks im Anodenfluid durch Aufnahme von Produktwasser, während es durch den Anodenraum strömt, oder führt zumindest zu einer Verminderung des Wasserverlustes durch verringerten Wasseraustrag über das Kathodenfluid. Wird der Wasserpartialdruck im Anodenfluid erhöht, so kann Wasser dem Betriebsreservoir wieder zugeführt werden, indem es im kälteren Befeuchtungsraum wieder kondensiert. Üblicherweise beträgt die Befeuchtung des Trägergases jedoch 100% relative Feuchtigkeit nach dem es den Befeuchtungsraum verlassen hat.

Das Anodenfluid wird im Anodenraum auf die Betriebstemperatur der Brennstoffzelle erhitzt. Eine vorgeschaltete Erhitzung des angereicherten Anodenfluids über einen Wärmetauscher, der mit Wärme aus dem Brennstoffzellenstapel versorgt wird, ist auch möglich. Die Temperatur des Anodenfluids ist in der Brennstoffzelle ist im Regelbetrieb erheblich höher als in der Befeuchtungseinheit. Nachdem das Anodenfluid bzw. das Trägergas die Brennstoffzelle verlassen hat, wird es in der Befeuchtungseinheit abgekühlt. Eine Abkühlung des Trägergases vor Eintritt in die Befeuchtungseinheit ist durch einen vorgeschalteten Wärmetauscher oder eine Kühleinrichtung möglich.

Ob die Befeuchtungseinheit aufgrund der Wärmemenge, die durch das Anodenfluid eingebracht wird gekühlt, oder aber aufgrund der Verdampfungswärme, die beim Befeuchten entzogen wird, erwärmt werden muss hängt von der Temperaturdifferenz zwischen Befeuchtungseinheit und Brennstoffzelle ab. Diese Temperaturdifferenz ergibt sich also im wesentlichen durch den Brennstoffzellentyp, also insbesondere davon ob eine Nieder- Mittel- oder Hochtemperatur Brennstoffzelle vorliegt und wie hoch die Betriebstemperatur in der Befeuchtungseinheit eingestellt wird. Daneben spielen auch noch andere Faktoren und Größen eine Rolle wie: die Art des Brennstoffs, die Volumenströme und Zusammensetzung des Anodenfluids bzw. das Versorgunslambda (stöchiometrisches Vielfaches des verbrauchten Brennstoffs) der Anode mit Brennstoff und Wasser, die Brennstoff- und Wasserdiffusion durch den Elektrolyten und die Wärmeabgabe der Befeuchtungseinheit an die Umgebung. Beispielsweise muss bei einer Brennstoffzelle deren Anodenfluid ein Versogungslambda von drei und eine Methanolkonzentration von 10% (Anteil der Teilchenmenge) aufweist und dessen Elektrolyt einen zu vernachlässigender Methanoldurchbruch, aber einen Wasserdurchbruch der etwa den Wasserverbrauch entspricht, aufweist, müsste die Temperaturdifferenz zwischen Brennstoffzelle und Befeuchtungsraum deutlich über 100°C liegen um eine Erwärmung des Befeuchtungsraumes durch einströmendes Anodenabgas zu erreichen. Würde kein Wasser aufgrund einer Diffusion durch den Elektrolyten dem Anodenfluid entzogen werden, müsste die Temperaturdifferenz immer noch etwa 70°C betragen im Falle die Wärmeabstrahlung von der Befeuchtungseinheit zu gering ist. Zum Heizen und/oder Kühlen des Befeuchtungsraums bzw. der Brennstoff enthaltenden Flüssigkeit kann eine entsprechende Temperiereinrichtung vorgesehen sein.

Um einen Energieverlust, also die Abkühlung der Brennstofflösung, durch Verdunstung von Wasserdampf und Brennstoffdampf zu verhindern, ist bei Brennstoffzellen mit einer Betriebstemperatur unter 130°C in der Regel ein Wärmeeintrag in die Befeuchtungseinheit zweckmäßig. Dazu kann beispielsweise die Abwärme der Brennstoffzelle der erfindungsgemäßen Brennstoffzelleneinheit verwendet werden. Hierzu ist vorzugsweise eine Einrichtung zum Wärmetausch zwischen der Brennstoffzelle und der Befeuchtungseinheit vorhanden.

Die Einrichtung zum Wärmetausch wird über eine Steuer- oder Regeleinrichtung der Brennstoffzelleneinheit angesteuert, so dass der Wärmetausch reduziert oder unterbrochen wird, wenn die Temperatur in der Befeuchtungseinheit zu hoch wird, und der Wärmetausch (d.h. die Zufuhr von Wärme von der Brennstoffzelle zur Befeuchtungseinheit) erhöht wird, wenn die Temperatur in der Befeuchtungseinheit zu niedrig wird. Darüber hinaus kann natürlich eine weitere Wärmequelle, wie ein Reformeroder ein elektrischer Verbraucher genutzt werden. Es kann auch eine extra Wärmequelle vorgesehen werden die bei Bedarf zugeschaltet wird.

Die Einrichtung zum Wärmetausch kann zwischen der Brennstoffzelle und der Befeuchtungseinheit angeordnet sein, wobei die Einrichtung über die Steuer- oder Regeleinrichtung angesteuert wird. Die Einrichtung zum Wärmetausch kann einen Lüfter oder ein Gebläse umfassen. Die Einrichtung zum Wärmetausch kann Körper umfassen, welche in den Befeuchtungsraum ragen.

Die Anordnung oder Form der Wärmetauschkörper im Befeuchtungsraum kann derart gestaltet sein, dass eine Selbstregelung der Füllhöhe im Befeuchtungsraum stattfindet.

Die Einheit zum Wärmetausch kann jedes zu diesem Zweck bekannte Mittel umfassen, wie z.B. einen oder mehrere Lüfter oder Radiatoren, die eine Wärmeströmung mittels erhitzter Luft ermöglichen, und/oder Körper aus einem gut wärmeleitenden Material, welche in den Befeuchtungsraum ragen. Generell kann die Einheit zum Wärmetausch Mittel zum Übertragen der Wärme durch Wärmeleitung, Konvektion oder Strahlung umfassen.

Die Wärmezufuhr in die Befeuchtungseinheit erfolgt durch Wärmeleitung oder durch Wärmetransport mittels erhitzter Luft, die auf die Befeuchtungseinheit strömt. Dafür geeignete Wärmequelle sind im Brennstoffzellensystem vorhanden. Insbesondere ist dafür der Brennstoffzellenstapel, der sogenannte Stack, geeignet. Ferner ist auch eine Abwärmenutzung von elektrischen Verbrauchern des Brennstoffzellensystems oder eine elektrische Beheizung möglich.

Um eine Wärmezufuhr mittels Wärmeleitung zu ermöglichen, beinhaltet die Befeuchtungseinheit eine oder mehrere geeignete thermische Verbindungen mit dem Brennstoffzellenstack. Die thermische Verbindung ist derart gestaltet, dass durch die Wärmeabfuhr innerhalb des Stacks möglichst geringe Temperaturunterschiede auftreten. Dies wird erreicht, indem dem Stack an mehreren Punkten Wärme entnommen wird, beispielsweise an beiden Endplatten, sowie an einer oder mehreren Wärmeabführungen innerhalb des Stacks. Bei der Nutzung der Abwärme von elektrischen Verbrauchern wie beispielsweise Pumpen kann die Wärme ebenfalls über Wärmebrücken abgeführt werden.

Die Wärmebrücken können auch derart ausgeführt sein, dass sie auf der heißen Seite miteinander verbunden sind und sich an der Seite der Wärmeabgabe aufteilen. Die Wärmebrücken können auch anstatt durch eine thermische Verbindung zur Brennstoffzelle bzw. zum Stack durch einen heißen Luftstrom erhitzt werden.

Bei dieser zweiten Option zur Wärmeübertragung auf die Befeuchtungseinheit kann Wärme durch Kühlluft vom Stack oder elektrischen Verbrauchern der Brennstoffzelleneinheit bereitgestellt werden. Die erwärmte Luft gibt bei dieser Ausführungsform direkt Energie an die Befeuchtungseinheit ab. Dies erfolgt mithilfe der Regelung des Luftvolumenstroms über die Temperatur des Betriebsreservoirs oder einer anderen Regelgröße. Für die Luftströmung kann beispielsweise ein regelbarer Lüfter verwendet werden. Dieser transportiert die durch Abwärme der Brennstoffzelle bzw. des Stacks erhitzte Luft an geeignete Wärmeaustauscherflächen der Befeuchtungseinheit.

Eine solche geregelte Erwärmung der Befeuchtungseinheit ist auch im Falle einer Brennstoffzellenkühlung durch einen extra Kühlkreislauf mittels einer Kühlflüssigkeit anwendbar. Hier kann ein regelbarer Teilstrom aus dem Kühlkreislauf abgezweigt werden und geeigneten Wärmeaustauscherflächen der Befeuchtungseinheit zugeführt werden. So kann wiederum eine geregelte Wärmeabgabe an das Betriebsreservoir erfolgen.

Es kann auch eine Wärmeübertragung durch beide dargestellte Prinzipien (der Wärmeleitung und der Erhitzung mittels erhitzten Kühlmittels) gleichzeitig erfolgen. Ferner kann auch eine extra Kühlung mit Außenluft vorgenommen werden, wenn eine schnelle Abkühlung des Betriebsreservoirs zweckmäßig ist. Die thermische Verbindung kann auch durch andere geeigneten Konstruktionen z.B. durch eine entsprechende räumliche Anordnung bzw. Verbindung von Systemkomponenten und/oder Brennstoffzelle und Befeuchtungseinheit erfolgen.

Bei Brennstoffzellen die eine hohe Betriebstemperatur, wie beispielsweise die Festoxidbrennstoffzelle (SOFC, solid oxide fuel cell), aufweisen, ist eine Kühlung notwendig da sonst die Befeuchtungseinheit zu heiß werden würde und geeignete Betriebstemperatur bzw. die Siedetemperatur der Brennstoff enthaltenden Flüssigkeit überschritten werden würde. Bei diesen Brennstoffzellensystemen ist eine Erwärmung der Anodenfluideinheit über einen extra Wärmezuführung also nicht zweckmäßig, da die Wärmeenergie des ausströmenden Anodenfluides größer ist als die Verdampfungswärme, die in der Befeuchtungseinheit zur Anreicherung von verbrauchten Dämpfen benötigt wird.

Sollte der Betriebstemperaturbereich von Brennstoffzelle und Befeuchtungseinheit geeignet sein, kann auf eine Wärmeübertragung mittels eines geregelten Wärmestromes bzw. einer geregelten Kühlung mittels eines Kühlluftstromes verzichtet werden und stattdessen über die Anodenabgastemperatur also der Wärme des abgereicherten Trägergases, das in etwa die Brennstoffzellentemperatur aufweist, der notwendige Energieeintrag in die Befeuchtungseinheit eingebracht werden, um diese zu temperieren. Diese Ausführung kommt ohne zusätzlichen Temperiervorrichtungen aus, welche die Befeuchtungstemperatur der Anodenfluideinheit regelt.

Die Zusammensetzung des mit Methanol und Wasserdampf angereicherten Trägergases (Kohlendioxid) ist abhängig von der Molaren Zusammensetzung der Brennstofflösung und dessen Temperatur. Die Partialdrücke der Dampfphasen entsprechen dem Dampfgleichgewicht über einem Mehrstoffgemisches bzw. über einer wässrigen Brennstofflösung.

Bei einer variablen und geregelten Betriebstemperatur der Befeuchtungseinheit als auch bei einer Regelung der Konzentration der Brennstofflösung über eine regelbare Brennstoffzudosierung ist es möglich, die Konzentrationen des Brennstoffdampfes und des Wasserdampfes im Fluid voneinander unabhängig einzustellen. Ferner kann die Füllmenge in der Befeuchtungseinheit noch Einfluss auf die Konzentrationen der Dämpfe haben. Durch die Veränderung der Konzentration und der Temperatur der Brennstofflösung wird der Dampfdruck der einzelnen Bestandteile der Brennstofflösung eingestellt. Hierüber wird die Zusammensetzung des Trägergases, d.h. des gasförmigen Fluids, eingestellt. Als Regelungsgrundlage können somit für die Brennstoffzelleneinheit in der Systemsteuerung die Dampfdruckkurven in Abhängigkeit von Temperatur und molarer Zusammensetzung verwendet werden.

Für eine genaue Regelung der Dampfdrücke kann es vorteilhaft sein, wenn die Konzentration und/oder die Füllmenge der Brennstofflösung und/oder der Anodenvolumenstrom erfasst werden. Die Konzentration des Brennstoffdampfes im Anodenfluid wird in der Regel gemäß der Brennstoffumsetzung, also proportional zur Stromstärke eingestellt. Die Konzentration des Wasserdampfs im Anodenfluid wird beispielsweise gemäß des Befeuchtungsbedarfes des Elektrolyten und gemäß einer Notwendigkeit der Wasserrückgewinnung eingestellt.

Soll beispielsweise der Füllstand in der Befeuchtungseinheit durch eine höhere Wasserrückgewinnung erhöht werden kann es förderlich sein wenn mehr Brennstoff verdampft wird und durch Erhöhung der Stromstärke und/oder durch einen erhöhten Brennstoffdurchbruch mehr Wasser auf der Kathode gebildet wird, führt das bei entsprechend geeigneten Membran-Elektroden-Kombinationen zu einer erhöhten Rückdiffusion von Wasser zum Anodenraum der Brennstoffzelle. Dieses zusätzliche Wasser wird über das Trägergas der Befeuchtungseinheit zugeführt und kann als Kondensat abgeschieden werden. Oder es kann mittels geringerem Wasserdampfpartialdruck dafür gesorgt werden, dass weniger Wasser von der Anode durch den Elektrolyten auf die Kathode diffundiert und über das Kathodenabgas ausgetragen wird. Dabei wird ein Betriebszustand der Befeuchtungseinheit gewünscht, bei dem die Wasserkonzentration des ausströmenden gasförmigen Fluids niedriger als zuvor sein soll, die Methanolkonzentration jedoch konstant bleiben soll. Dafür wird, bei gleichzeitiger Erhöhung der Methanolkonzentration, die Temperatur im Betriebsraum soweit abgesenkt, bis der Wasserdampfdruck der neuen Lösung auf einen geeigneten Wert abgesunken ist.

Bei einer höheren Last kann auch der Volumenstrom des zugeführten Trägergases erhöht werden, um mehr Trägergas mit Brennstoff anzureichern, um auf diese Weise der Brennstoffzelle mehr Brennstoff zuzuführen. Damit die Regelung der Brennstoffmenge über die Steuerung des Volumenstroms zuverlässig ausgeführt werden kann ist die Befeuchtungseinheit derart ausgelegt, dass selbst bei maximaler Strömung des Trägergases sowohl der Brennstoffanteil als auch der Wasseranteil im Trägergas gesättigt sind.

Wird eine Brennstoffzelle mit einem Elektrolyten bzw. einem Elektrolytsystem verwendet, dem flüssiges Wasser schadet, dann sollte eine zu starke Befeuchtung des Trägergases mit Wasserdampf verhindert werden. Dies kann wiederum mittels einer Steuerung und einer Temperaturerfassung der Brennstofflösung und der Brennstoffzelle ermöglicht werden.

Eine Selbstregelung des Füllstandes bzw. der Füllmenge des Betriebsreservoirs kann bei Systemen bei denen die Anodenfluideinheit extra erwärmt werden muss, mittels einer speziellen Anordnung von Wärmebrücken erreicht werden, wobei der Effekt eines vom Wassergehalt des Anodenfluids abhängigen Grades des Wassereintrags bzw. -austrags in das bzw. aus dem Anodenfluid genutzt wird. Wie beschrieben ist der Wasseraustrag vom Anodenraum in das Kathodenfluid umso höher, je höher der Wasserpartialdruck im Anodenfluid ist. Eine Erhöhung des Wasserpartialdrucks findet dann statt, wenn die Temperatur im Betriebsreservoir, bzw. dem Befeuchtungsbereich, erhöht wird. Eine selbstregelnde Temperaturerhöhung kann über die Füllhöhe der Brennstofflösung bei gleichzeitiger entsprechender Anordnung der Wärmebrücken im Betriebsreservoir erfolgen. Es ist möglich, die Anordnung so zu wählen, dass ein höherer Temperatureintrag bei höherem Füllstand ermöglicht wird. Dies beruht auf den Effekt der höheren Wärmeabgabe bei Kontakt der Wärmebrücken mit einer flüssigen Phase als mit einer gasförmigen Phase. Die Form der Wärmebrücken kann derart gestaltet sein, dass der Effekt, erheblich mehr Wärme abzugeben, wenn sie mit Flüssigkeit benetzt sind, als wenn sie sich in einer Gasphase befinden, verstärkt wird. Folglich erhöht sich die Temperatur der Brennstofflösung mit zunehmender Größe an Wärmetauscherflächen der Wärmebrücken, die benetzt werden.

Ein höherer Wasserdampfpartialdruck im Anodenfluid bewirkt einen höheren Wasserverlust durch Diffusion über den Elektrolyten. Ein höherer Brennstoffdampfdruck bewirkt außerdem ein höheres Anodenversorgungslambda, was zu einem erhöhten sogenannten "Brennstoff-Cross-Over" bzw. zu einer erhöhten Wasserbildung an der Kathode führt. Diese Effekte bewirken wiederum eine Reduzierung des Volumens der Brennstofflösung, was folglich zu einer Absenkung des Füllstandes und wieder zu einem Temperaturrückgang führt. Im Gegensatz dazu kühlt sich die Lösung bei niedrigem Füllstand ab und durch eine geringere Wasserdampferzeugung sinkt die Wasserkonzentration im Anodenraum, was den Wasserverlust minimiert. Dieser ausgleichende Prozess stabilisiert das Volumen in der Befeuchtungseinheit.

Eine einfachere Ausführungsform der Brennstoffzelleneinheit ist vor allem bei einer Verwendung in einem Brennstoffzellensystem, das folgende Eigenschaften aufweist, möglich: a) der Wasserverlust in dem Betriebsreservoir ist aufgrund einer Wasserdiffusion durch den Elektrolyten gering und b) die Leistung der Brennstoffzelle ist nur in geringem Maß abhängig von der Methanolkonzentration im Anodenfluid. In diesem Fall kann auf eine aufwändigere Regelung der Methanolkonzentration sowie einer Füllstandsregelung verzichtet werden. Bei einer solchen Befeuchtungseinheit ist eine Füllstandsregelung über die Zudosierung einfach möglich, indem solange Brennstoff oder Brennstofflösung zudosiert wird, bis der gewünschte Füllstand erreicht ist. Der Füllstand wird bei dieser Ausführung über eine Füllstandsmessung im Betriebsreservoir erfasst. Die Temperatur der Brennstofflösung kann je nach Methanolbedarf angepasst werden.

Das Betriebsreservoir und der Befeuchtungsraum können in Bereiche segmentiert sein, in denen die Brennstofflösung verschiedene Temperaturen aufweist. Die einzelnen Bereiche sind zu einem gewissen Grad thermisch voneinander isoliert. Diese Segmentierung kann beispielsweise mit Trennwänden ausgeführt werden, die geeignet große Öffnungen aufweisen, um die gewünschte Flüssigkeitsströmung von einem zum anderen Teil des Betriebsreservoirs zu gewährleisten. Die verschiedenen Kammern können jeweils eigene Ein- und Ausgangsöffnungen haben. Dadurch kann eine Versorgung der Anode durch Teilströme aus verschieden temperierten Kammern erfolgen. Eine Regelung der Versorgung der Anode kann durch eine Regelung der Größe bzw. der Verhältnisse der einzelnen Teilströme verwirklicht werden.

Eine Segmentierung der Kammern ist auch dann vorteilhaft, wenn der Siedepunkt des Brennstoffs unter der Betriebstemperatur der Brennstofflösung im Reservoir liegt und aus diesem Grund zunächst eine Verdünnung mit Brennstofflösung erfolgen muss.

Eine Segmentierung des Betriebsreservoirs bzw. des Befeuchtungsraumes ist auch bei Ausführungsformen sinnvoll, bei denen das Kondensat des überschüssigen Anodenfluids aufgefangen wird, insbesondere im Fall einer offenen und drucklosen Zuführung des Anodenfluids ohne Pumpen.

Eine Segmentierung des Betriebsreservoirs bzw. des Befeuchtungsraumes ist auch bei Ausführungsformen sinnvoll, bei denen insbesondere beim Betriebsstart in kurzer Zeit ein Anodenfluid mit hohen Dampfkonzentrationen der Brennstoffzelle bereitgestellt werden soll. In diesem Fall kann bei einer Segmentierung nur das Segment in dem sich der oder ein Teil der Befeuchtungsvorrichtung befindet beispielsweise elektrisch vorgeheizt werden.

Neben Kondensat können aber auch andere Flüssigkeiten über die Öffnung der Befeuchtungseinheit zugeführt werden. Die Zuführung geschieht mittels einer Pumpe oder mittels einer Flüssigkeitssäule, die mit der Brennstofflösung verbunden ist und über die Schwerkraft die Flüssigkeit in die Betriebslösung drückt.

Soll die Flüssigkeit über eine Flüssigkeitssäule in die Befeuchtungseinheit gelangen, so kann der Zulauf derart gestaltet sein, dass keine Dämpfe der Brennstofflösung entweichen können. Dies kann verhindert werden, indem sich zwischen Kondensatzuführung bzw. Wasserreservoir und dem Innenraum der Befeuchtungseinheit eine stehende Wassersäule befindet. Dies kann beispielsweise durch einen Siphon, der mit dem zufließenden Wasser gefüllt ist, oder durch eine entsprechend gestaltete Rohrleitung, z.B. mit geringem Rohrdurchmesser, erreicht werden.

Die Aufnahme von Kondensat kann durch eine spezielle Ausführung der Form und der Verbindung des Aufnahmeraums mit dem Befeuchtungsraum, sowie eine spezielle Anordnung der Auslassvorrichtung derart gestaltet sein, dass sich eine gewünschte Füllmenge im Befeuchtungsraum automatisch einstellt. Dies basiert zum einen auf dem Prinzip der kommunizierenden Röhren zwischen dem Befeuchtungsraum und der damit verbundenen Kondensatkammer, zum anderen darauf, dass die Druckunterschiede in der Gasphase der beiden Kammern relativ konstant sind und bei den meisten Ausführungen nur wenige Millibar betragen. Auch bei dieser speziellen Ausführungsform der Befeuchtungseinheit mit einer Kondensatauffangkammer soll kein Rücklauf von Brennstofflösung in die Kondensatauffangkammer auftreten. Dies wird erreicht, indem die Kammer der Kondensataufnahme mit dem Befeuchtungsraum durch eine Öffnung mit kleinem Durchmesser (beispielsweise zwischen 0,2 und 4 mm) bzw. durch einen anderen hydraulischen Widerstand verbunden ist und eine gerichtete Flüssigkeitsströmung von der Kondensatkammer zum Befeuchtungsraum stattfindet. Da die Kondensatauffangkammer und der Befeuchtungsraum durch eine Öffnung hydraulisch miteinander verbunden sind, kann durch eine Regelung der Füllhöhe in der Kondensatkammer die Füllhöhe der Brennstofflösung im Befeuchtungsraum eingestellt werden. Die Füllhöhe in der Kondensatkammer wird über die Höhe des Fluidausgangs eingestellt bzw. begrenzt. Die Kondensatkammer kann dadurch solange vom ZweiPhasen-Fluid das flüssige Kondensat aufnehmen, bis die Höhe des Flüssigkeitsspiegels den Fluidausgang der Kondensatkammer erreicht hat. Zusätzliches Kondensat wird dann über den Fluidausgang mit der Gasphase abgegeben. Der Füllstand im Befeuchtungsraum bleibt also solange konstant wie die Menge des nachströmenden Kondensats höher ist als die Menge an Wasser bzw. Brennstoff, die aus dem System entweicht. Das überschüssige Kondensatfluid kann dem Kathodenabgasstrom wiederum zugeführt werden, wobei von der Kondensatkammer nicht aufgenommenes flüssige Kondensat in dem Kathodenabgasstrom derart eingetragen wird, z.B. mittels speziellen Verdunstungskörpern, dass es im Kathodenabgas verdunstet, bevor das Abgas das System verlässt.

Um das Brennstoffzellensystem entsprechend zu regeln, kann ein Sensor in der Kondensatkammer angebracht sein, der ein verändertes Messsignal bei Unterschreitung einer oder mehrerer definierter Füllhöhen erzeugt. Die Regelung betrifft vornehmlich die Einstellung der Höhe des Anteils des Kathodenabgases, das über einen Wärmetauscher gekühlt werden soll.

Zugeführtes Kondensat oder andere Flüssigkeit wie separat zugeführtes Wasser kann, bevor es in die Brennstofflösung gelangt, dazu verwendet werden, um aus dem Kreislauf abgegebenes Trägergas von Brennstoffen aufzunehmen. Diese können am geeignetsten in die Phase der Flüssigkeit überführt werden, wenn die Flüssigkeit möglichst kühl ist und die Kontaktzeit der beiden Fluide, beispielsweise durch hohe Oberflächen, möglichst lange ist.

Die Befeuchtungskammer kann einen Überlauf beinhalten, durch den im Falle eines zu hohen Füllstands die überschüssige Brennstofflösung abgegeben wird. Die abgegebene Brennstofflösung wird extra aufgefangen, verdunstet oder in das Anoden- oder Kathodenkompartment des Stacks geleitet. Eine Austrittsöffnung kann sich auch in Bodennähe des Flüssigkeitskompartment befinden um den Inhalt wechseln zu können oder um abgesunkene Verunreinigungen abzupumpen.

Je nach Belastungen bzw. Verunreinigungen des Brennstoffs können Vorrichtungen zur Reinigung oder Aufbereitung vorgesehen sein. Dazu können Mittel wie Ionenaustauscher oder Filter verwendet werden um enthaltene Fremdstoffe zu entfernen. Diese Mittel können entweder in der Befeuchtungseinheit integriert sein, oder sich außerhalb der Befeuchtungseinheit befinden. In diesem Fall sind in der Befeuchtungseinheit eine oder mehrere Öffnungen vorgesehen, durch welche die Brennstofflösung entnommen und nach einer Reinigung bzw. Aufbereitung teilweise oder vollständig wieder zurückgeleitet werden kann.

Da bei diesem Systemprinzip der gasförmige Anodenfluidstrom von oder aus dem Brennstoffzellenstack üblicherweise mit einer Fördereinrichtung bewegt wird kann diese Fördereinrichtung mit jener Fördereinrichtung, die den Kathodenvolumenstrom (Luft) bewegt, gekoppelt werden. Dies kann beispielsweise mit einer sogenannten Doppelkopfpumpe umgesetzt werden da diese Pumpe zwei Fördereinrichtungen mit einer Antriebseinrichtung verbindet. Dabei können je nach Höhe der beiden Volumenströme die Pumpenköpfe verschieden groß dimensioniert sein. Die Verwendung von einer solchen Fördervorrichtung kompensiert den Nachteil dieser hier aufgezeigten gasförmigen Versorgung gegenüber einer Anodenversorgung von DMFCs mit flüssigem Brennstoff. Dieser Nachteil besteht insbesondere darin, dass in der Regel, das Fördern eines gasförmigen Fluides mit verdampften Methanol aufgrund der höheren Volumenströmen energieintensiver ist, als das Fördern einer flüssigen Methanollösung.

Brennstoffzellen mit kleinen Leistungen wie beispielsweise 0,01 - 30 Watt können mit einem speziellen Aufbau der Befeuchtungseinheit versorgt werden. Für solche Ausführungsform können kleinere Gaspumpen oder Schaufelrädchen verwendet werden um den Anodenkreislauf aufrecht zu erhalten. Es kann der Kreislauf aber auch ohne mechanisch bewegte Förderereinrichtungen mithilfe von physikalischen Effekten aufrechterhalten werden. Dabei wird beispielsweise auf Basis der Gasausdehnung durch Temperaturerhöhung bzw. Volumenverminderung durch Abkühlung Anodenfluid von und zur Befeuchtungseinheit transportiert. Mit dieser Erfindung kann also das Anodefluid im Kreislauf gefördert werden ohne das elektrische Energie für eine Fördereinrichtung benötigt wird. Prinzipiell könnten auch dafür notwendigen Wärmetauscher ohne mechanisch bewegte Fördereinrichtungen mit Luft gekühlt werden..

Gemäß einer Ausführungsform kann die Befeuchtungseinheit ein Sichtfenster aufweisen, das Einblick in die Befeuchtungseinheit gewährt. Dies kann beispielsweise zur Überprüfung des Füllstands dienen. Dabei kann je nach Ausführung das Sichtfenster auch beliebig groß dimensioniert werden, um Details von Interesse für den Benutzer sichtbar zu machen.

Zum Zweck einer geeigneten Versorgung der Anode durch das Anodenfluid mit den richtigen Konzentrationen der Reaktanden Wasser und Methanol und der Einhaltung eines gewissen Füllstandes sowie einer ausreichenden Befeuchtung der Elektrolyten können folgende Messwerte bzw. Parameter erfasst und ausgewertet werden: Temperatur der Brennstofflösung, Temperatur der Brennstoffzelle, Füllstandshöhe der Brennstofflösung oder zumindest ein Signal, das ein minimales Brennstofflösungsvolumen erfasst und darüber hinaus eventuell Einzelzellspannungen, Volumenströme des Anoden- und Kathodenfluids, Protonenleitfähigkeit der Elektrolyte und Konzentration des Brennstoffs in der Brennstofflösung. Zu einer geeigneten Versorgung können mit Hilfe dieser Messwerte in der Befeuchtungseinheit folgende Parameter verändert werden: Konzentration des Brennstoffs in der Brennstoffzellenlösung über die Menge der Zudosierung sowie die Temperatur der Brennstofflösung.

Wasserverlust, der durch eine Diffusion von Wasser von der Anode zur Kathode der Brennstoffzelle und durch Austrag über die Kathode auftritt, kann durch eine Kondensation von Wasserdampf des Kathodenabgases der Brennstoffzellenreaktion kompensiert werden. Da es jedoch aufgrund der benötigten großen Wärmetauscher unvorteilhaft ist, den gesamten Kathodenabgasstrom zu kondensieren, wird nur ein Teil des Kathodenabgases mittels Wärmetauscher und Kühlvorrichtungen gekühlt, um Wasser durch Kondensation zurückzugewinnen. Die Höhe der Wasserrückgewinnung richtet sich dabei nach dem Wasserverlust durch den Brennstoffzellenbetrieb. Dieser äußert sich wiederum in der Füllhöhe der Brennstofflösung in der Befeuchtungskammer. Durch eine Messung kann die Füllhöhe in der Befeuchtungskammer festgestellt werden. Mit dieser Messgröße wird die Höhe des Teilstroms des Kathodenabgases, welcher kondensiert, derart eingestellt, dass das gewonnen Kondensat ausreicht den gewünschten Füllstand zu halten.

Die Befeuchtungseinheit eignet sich für eine Verwendung in einem Brennstoffzellensystem nach einer zweiten Ausführungsart. Diese enthält einen sogenannten Reformer bzw. einer Einrichtung zur Umwandlung von Brennstoffdampf in ein wasserstoffreiches Gas. Die Befeuchtungseinheit dient dabei zur Versorgung des Reformers mit einem mit Brennstoff angereichertem Trägergas. Um die für die Reformerreaktion notwendigen Temperaturen zu generieren bzw. ein Abkühlen des Reformers durch die im Falle eines Dampfreformers endotherme Reformerreaktion zu vermeiden, kann ein sogenannter Brenner eingesetzt werden, der katalytisch oder mit einer Flamme Brennstoff oxidiert. Dieser kann mithilfe eines Teilstroms von angereichertem Anodenfluid aus der Befeuchtungseinheit unter Beimischung von Luftsauerstoff versorgt werden. Der Brenner kann aber auch, wie dem Stand der Technik entsprechend, mit Anodenabgas versorgt werden. Die notwendige Wärmeübertragung wird durch eine thermische Kopplung des Brenners mit dem Reaktionsraum der Reformereinheit ermöglicht. Insbesondere beim Startvorgang, bei dem noch kein Anodenabgas vorliegt, ist eine Nutzung von Brennstoffdampf aus der Befeuchtungseinheit sinnvoll. Die Befeuchtungseinheit hat in diesem Fall eine weitere Auslassöffnung, mittels derer Brennstoffdampf für eine Heizeinrichtung entnommen wird. Um Sauerstoff dem mit Brennstoff angereicherten Gas zuzuführen wird Kathodenabgas oder Frischluft verwendet. Durch diese Erfindung wird eine Anodenabgasnutzung möglich, die nur jenen Teil des Abgases nutzt, der aufgrund einer zusätzlichen Kohlendioxidproduktion anfällt. Durch die so entstehende Möglichkeit den Feedstrom für den Abgasbrenner so niedrig wie möglich einzustellen, kann eine optimale Nutzung des Brennstoffs ermöglicht werden.

Da in diesem Kreislaufbetrieb beim Abschalten des Systems die Wasserstoffkonzentration in dem Gasraum der Befeuchtungseinheit nicht absinkt, kann mit dem Reformat beim Starten die Brennstoffzelle betrieben werden obwohl der Reformer noch nicht genügend Wasserstoff produziert. Die Befeuchtungseinheit kann zu diesem Zweck derart gestaltet sein, dass sie einen Gasraum umfasst der für einen Kaltstart genügende Mengen an wasserstoffreichem Gas zur Verfügung stellt. Es kann auch ein Anschluss vorgesehen sein in dem wasserstoffreiches Gas abgezweigt werden kann. Von diesem Anschluss kann Reformatgas in einem Drucktank gepumpt werden oder in ein Metallhydridspeicher gesammelt werden.

Bei Brennstoffzellensystemen die einen Reformeraufweisen kann die Abwärme der Vorrichtung, die benötigt wird um den Reformer zu erhitzen (in der Regel ein katalytischer Brenner), auch für die Befeuchtungseinheit genutzt werden. Diese Brennereinheit ist als Wärmequelle beim Betriebsstart Vorteilhafter als der Brennstoffzellenstack, da sie schneller höhere Temperaturen erreicht. Während des Betriebes kann eine Wärmezuführung vom katalytischen Brenner zur Befeuchtungseinheit jedoch zu Verlusten des Systemwirkungsgrades führen. Der Wärmestrom von dem Brenner zur Befeuchtungseinheit kann daher flexibel (beispielsweise über Lüfter oder einer beweglichen Vorrichtung) gestalltet sein.

Für Anwendungen mit einer Vorreformierung werden Anodenfluide mit einem Mengenverhältnis von im Brennstoff enthaltenen Kohlenstoff und Wasserdampf (S/C = steam to carbon ratio) von 1 : 2 bis 1 : 7 insbesondere zwischen 1 : 2,5 und 1 : 4 verwendet. Eine stark überstöchiometrisches S/C ist von Vorteil wenn auf eine zweite katalytische Stufe zur Kohlenmonoxidreinigung verzichtet wird. Da bei diesen Brennstoffzellen eine starke Verdünnung des Anodenfluids mit Kohlendioxid aufgrund der Absenkung der Wasserstoffkonzentration im Anodenraum durch Kohlendioxid nachteilig sein kann, werden hier Dampfmischungen mit einer niedrigen Kohlendioxidkonzentration verwendet. Dies erfordert beispielsweise in der Anodenfluideinheit bei einer 3 Molaren Methanollösung Temperaturen um 80°C um eine Dampfmischung mit unter 50% Kohlendioxidkonzentration bei etwa 17% Methanoldampf und 38% Wasserdampf zu erreichen.

Verschiedene Brennstoffzellen, insbesondere die SOFC und die Schmelzcarbonatbrennstoffzelle (MCFC, molton carbonate fuel cell), weisen eine der Anodenreaktion vorangehende Dampfreformierung auf, die je nach Betriebsparameter und Umsetzungsgrad die Anode mit einem Brenngas mit variierendem Wasserstoffanteil versorgt. Dazu werden in den Anoden der Hochtemperatur Brennstoffzellen Katalysatoren wie Nickellegierungen oder Nickel-Cermet oder Ruthenium, Eisen Kobalt, eingesetzt, die sowohl eine Dampfreformierung als auch die Anodenreaktion katalysieren können. Für Anwendung ohne Reformer werden Anodenfluide mit geringerem Wasserdampfanteil verwendet, da entstehendes Produktwasser genutzt werden kann.

Es können aber auch für die Dampfreaktion geeignete Katalysatoren - wie in der DE 19 945 667 für eine DMFC mit interner Reformierung beschrieben - dem Anodenkatalysator vorgelagert sein. Als Katalysatoren eignen sich dafür beispielsweise Cu-Mn-O oder Cu/ZnO/Al₂O₃ mit denen bei Temperaturen von 260°C schon relativ hohe Umsetzungsraten erzielt werden. Bei einer Temperatur von 200°C, bei der beispielsweise Phosphorsauren Brennstoffzellen mit Methanol betrieben werden können, sind die Umsetzungsraten jedoch noch relativ niedrig. Daher kommt es bei einer Reformierung bei niedrigen Temperaturen zu einer Versorgung der Anode mit einem Fluid, dass neben Wasserstoff auch hohe Anteile an Methanol und Kohlenmonoxid aufweist. Um für die variierenden Betriebstemperaturen eine geeignete und kontinuierliche Versorgung zu gewährleisten ist eine gasförmige Versorgung mit Hilfe der Befeuchtungseinheit vorteilhaft. Insbesondere kann je nach Betriebstemperatur und der sich dadurch ergebenden Umsetzungsraten die Zusammensetzung, insbesondere die Brennstoffkonzentration, des Versorgungsgemisch aus Brennstoff- und Wasserdampf über eine Veränderung von Temperatur der Brennstofflösung und deren Brennstoffkonzentration passend eingestellt werden.

Die Befeuchtungseinheit ist vorzugsweise gegenüber anderen Systemkomponenten wie Stack oder Reformer und der äußeren Umgebung in geeigneter Weise isoliert. Die Isolierung kann mehrschichtig aufgebaut sein und Aussparungen für Rohrleitungen oder Kabel aufweisen.

Der Aufbau der Befeuchtungseinheit kann flexibel und modulartig erfolgen. Um den Austausch von Komponenten, wie beispielsweise des Brennstoffzellenstacks oder der Vorrichtung zur Aufbereitung der Brennstofflösung, zu ermöglichen, können die Anschlüsse lösbar gestaltet werden. Da die Befeuchtungseinheit zentrales Element ist und beispielsweise günstig aus Kunststoff gefertigt werden kann, kann sie auch als tragende Vorrichtung für andere Systemkomponenten oder Baugruppen erweitert werden die in dieser Erweiterung fest bzw. lösbar verankert werden können.

Die Befeuchtungseinheit kann für verschieden Arten von PEMFC eingesetzt werden. Der Elektrolyt kann je nach Brennstoffzellentyp bzw. Art des Brennstoffs und Betriebstemperatur angepasst sein. Im Bereich der Nieder- und Mitteltemperatur PEMFC (40-130°C Betriebstemperatur) sind unter anderem fluorierte Polymere mit Sulfonsäuregruppen, sulfonierte Polycarbonat/Hydrocarbon-Systeme,sowie Polyetheretherketon (PEEK) mit Sulfonsäuregruppen geeignet. Diese Elektrolytmembransysteme können mit einer Gewebeverstärkung ausgestattet sein. Um Brennstoffzellen mit gasförmigen Brennstoffen bei Temperaturen über 80°C zu betreiben ist es notwendig den Wasserrückhalt im Elektrolyt auf hohem Niveau zu halten um auch bei geringer Befeuchtung durch Anoden- und/oder Kathodenfluid eine hohe Ionische Leitfähigkeit zu erhalten. Dazu ist es vorteilhaft wenn die Ionenaustauschkapazität der Elektrolyten hoch ist. Außerdem können Zusätze wie Silikate, Silizium- Zirkon-, oder Titanoxid, Zirkonphosphat, Herteropolysäuren wie beispielsweise Phospohorwolframsäure, fluorierte Polymere oder andere Zusätze im Elektrolytsystem zum Einsatz kommen. Auch die Verwendung von Diffusionssperrschichten in der Membran oder in einer Elektrode ermöglicht die Feuchtigkeit in der Elektrolytmembran zu erhöhen und sie somit für einen Betrieb mit der Befeuchtungseinheit geeignet zu machen. Um genügend Feuchtigkeit solchen Elektrolyten zuzuführen, muss bei solchen Brennstoffellen ein hoher Anteil von Wasserdampf vorhanden sein. Eine gute Versorgung mit Wasserdampf kann beispielsweise mit einer 2,3 molaren Methanollösung in der Befeuchtungseinheit bei einer Befeuchtungstemperatur von 72°C erreicht werden, was eine Methanoldampfkonzentration von etwa 10 Volumenprozent und eine Wasserdampfkonzentration von 28 Volumenprozent im Kohlendioxid-Trägergasstrom ergibt. Verändert man die Temperatur der Flüssigkeit z.B. auf 67°C so liegt die Methanoldampfkonzentration in der Sättigung bei 8 Volumenprozent und die Wasserdampfkonzentration bei 23 Volumenprozent bei einer 2,3 molaren Methanollösung. Erhöht man die Temperatur auf 77°C dann steigt die Methanoldampfkonzentration auf 12 Volumenprozent und die Wasserdampfkonzentration auf 35 Volumenprozent. Dies zeigt, dass sich die Konzentrationen der einzelnen Bestandteile nicht immer linear mit der Temperatur verändern und eine Temperaturänderung das Verhältnis von Methanoldampf zu Wasserdampf im Trägergas verändern kann. Bei einer Temperaturerhöhung nimmt insbesondere der Anteil an Wasserdampf stärker zu als der Anteil an Methanoldampf. Das Verhältnis von Methanoldampf zu Wasserdampf kann selbstverständlich durch Einstellung der Konzentration des Methanols in der wässrigen Lösung verändert werden, wobei bei einer Erhöhung des Methanols in der wässrigen Lösung zu einer Erhöhung des Methanols im Trägergas führt. Dies gilt gleichermaßen für andere Brennstoffe wobei sich aufgrund unterschiedlicher Siedepunkte die Wirkung der Temperatur auf die Konzentration im Trägergas verändern kann.

Im Bereich der Hochtemperatur PEMFC (130-250°C Betriebstemperatur), bestehen Elektrolyte für PEMFC aus einer Matrix wie Polybenzimidazol (PBI) oder Polyoxadiazole in der eine Säure gebunden ist. Bei der Säure handelt es sich meist um Phosphorsäure. Hierbei ist der Ausdruck "Phosphorsäure" so zu verstehen, dass er auch Polyphosphorsäuren und Verbindungen, die Phosphorsäuregruppen enthalten, umfasst. Diese Membranen benötigen für eine gute Protonenleitfähigkeit meist keine Befeuchtung. Für solche Mittel und Hochtemperatur PEMFC Elektrolyten können auch Polysulfonsäuren, Säure-Base-Mischungen, z.B. Polyvinylphosphonsäure oder Sulfonsäure mit SPEEK-PBI, organische Membranen mit anorganischen Bestandteilen wie PEEK oder fluorierte Polymere mit Zirkonphosphat verwendet werden. Es werden auch geeignete Hochtemperatursysteme mit gebundener Säure auf Silikat-Basis, oder anorganische Matrizen mit eingelagerten Säuren, oder Hybrid-Protonenleiter entwickelt.

Bei Hochtemperaturelektrolytsystemen beruht die ionische Leitfähigkeit nicht oder nur in geringem Maße auf der Anwesenheit von Wasser. Daher können Brennstoffzellen mit solchen Elektrolytsystemen mit einem Anodenfluid versorgt werden, das weniger Wasser und mehr Brennstoff enthält. Um eine Elektrolytschädigung durch flüssiges Wasser zu vermeiden wird insbesondere bei Betriebsstart die Befeuchtungstemperatur in der Befeuchtungsenheit derart niedrig eingestellt, dass es zu keiner Auskondensierung im Brennstoffzellenstack kommen kann. Während des Betriebs kann aufgrund der hohen Temperatur im Brennstoffzellenstack kein flüssiges Wasser auftreten. Eine gute Versorgung wurde bei einer DMFC mit solchen Elektrolyten mit einer 4 bis 7,5 Molaren Methanollösung bei einer Temperatur in der Befeuchtungseinheit von 62-74°C erreicht.

Neben PEM Brennstoffzellen können auch MCFCs oder SOFCs mit der Anodenfluideinheit versorgt werden. Insbesondere geeignet ist die Anodenfluideinheit wenn neben der Brennstoffzuführung auch eine Versorgung mit Wasserdampf erfolgt. Aufgrund einer internen Dampfreformierung, die am Anodenkatalysator wie beispielsweise Nickel und einer Betriebstemperatur über 600°C stattfindet, kommt es zu einem Wasserdampfbedarf, der aus der Befeuchtungseinheit bereitgestellt wird. Zu beachten ist in diesem Falle, bei dem die Brennstoffzellentemperaturen bis 1100°C erreichen können, dass ein Wärmetauscher vorgesehen wird der das Anodenfluid, das von der Brennstoffzelle in die Befeuchtungseinrichtung strömt, kühlt. Zur Vorheizung des Anodenfluids aus der Befeuchtungseinrichtung kann ebenfalls eine Wärmeaustauschervorrichtung genutzt werden. Diese Systeme können auch mit einem Reformer kombiniert werden.

Nachfolgend wird die Erfindung anhand von Ausführungsbeispielen mit Bezug auf die Zeichnungen näher erläutert. In den Zeichnungen zeigen:
Fig. 1 eine schematische Darstellung eines erfindungsgemäßen Brennstoffzellensystems mit einer Befeuchtungseinheit;
Fig. 2 eine Darstellung der Befeuchtungseinheit sowie eines diese Befeuchtungseinheit enthaltenden Anodenkreislaufes;
Fig. 3a, 3b, 3c und 3d Möglichkeiten der Anreicherung des Trägergases mit Dämpfen der Brennstofflösung;
Fig. 4a und 4b Darstellungen der Wärmeübertragung von der Brennstoffzelle zur Befeuchtungseinheit;
Fig. 5 und 6 detailliertere Darstellungen zweier Ausführungsformen der Befeuchtungseinheit mit Anodenabgasreinigung;
Fig. 7 und 8 eine schematische Darstellung des Brennstoffzellensystems mit Befeuchtungseinheit sowie mit einem Reformer;
Fig. 9 eine Darstellung eines Brennstoffzellensystems mit Befeuchtungseinheit bei der ein Kreislauf des Trägergases ohne mechanisch Teile aufrechterhalten wird;
Fig. 10 eine Darstellung einer einfach ausgebildeten Befeuchtungseinheit.

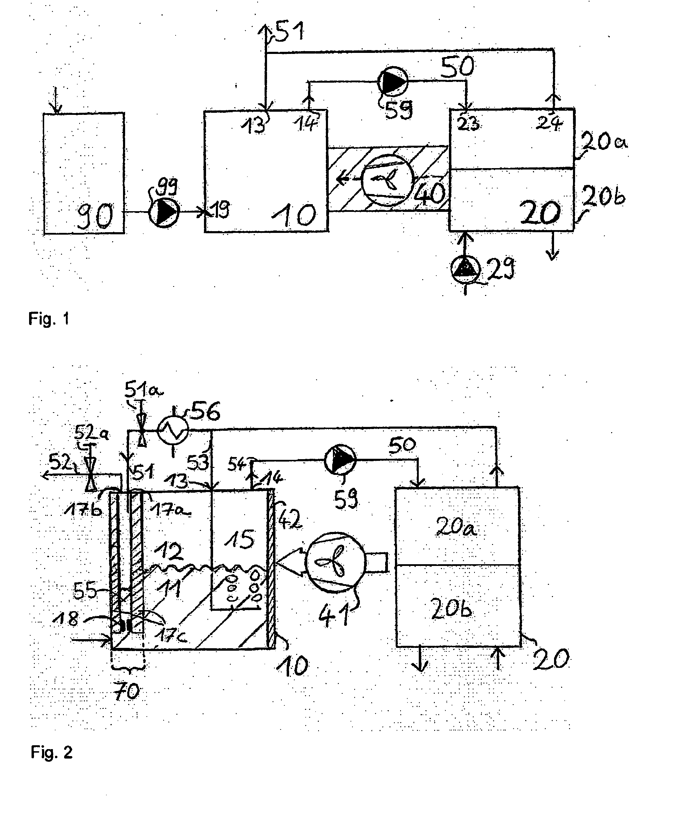

Fig. 1 zeigt eine erfindungsgemäße Brennstoffzelleneinheit. Dieses weist unter anderem einen Brennstofftank 90, eine Befeuchtungseinheit 10 und eine Brennstoffzelle 20 auf. Gasförmiges Fluid, auch Anodenfluid genannt, wird mittels einer Pumpe 59 im Kreislauf, der als Anodenkreislauf 50 bezeichnet wird, gefördert. Gemäß dem Anodenkreislauf strömt das in der Anode abgereicherte Anodenfluid aus einem Auslass 24 einer Anodenseite 20a der Brennstoffzelle 20 und wird über einen Einlass 13 in die Befeuchtungseinheit 10 geleitet. In der Befeuchtungseinheit 10 wird verbrauchter Brennstoffdampf (und bei manchen Brennstoffzellentypen auch abgereicherter Wasserdampf) im Anodenfluid ersetzt. Das so angereicherte Anodenfluid strömt über einen Auslass 14 der Befeuchtungseinheit 10 und über einen Einlass 23 in die Anodenseite 20a der Brennstoffzelle 20, wo es durch die Brennstoffzellenreaktion wiederum abgereichert wird.

In den Einlass 13 der Befeuchtungseinheit 10 strömt also jenes Anodenfluid, das, nachdem es die Anodenseite 20a der Brennstoffzelle 20 passiert hat, nicht ausgestoßen wurde sondern im Anodenkreislauf verbleibt. Hingegen tritt aufgrund neu entstehenden Kohlendioxids überschüssig gewordenes Anodenfluid über einen Auslass 51 aus dem Kreislauf aus.

Zwischen Befeuchtungseinheit 10 und Brennstoffzelle befindet sich eine Vorrichtung 40 zum Leiten von Abwärme von der Brennstoffzelle zur Befeuchtungseinheit 10. Die Leitung erfolgt über einen Luftstrom oder über eine thermische Kopplung. Ferner sind eine Pumpe 29 vorhanden, welche eine Kathodenseite 20b der Brennstoffzelle 20 mit Luft versorgt, sowie der bereits erwähnte Brennstofftank 90, aus dem Brennstofflösung über eine Fördervorrichtung 99 und einen Einlass 19 in die Befeuchtungseinheit 10 gefördert wird.

In Fig. 2 ist ein schematische Darstellung einer möglichen Ausführungsform der Befeuchtungseinheit 10 und des Anodenkreislaufes 50. Bei diesem Ausführungsbeispiel strömt abgereichertes Anodenfluid 53 von der Anodenseite 20a der Brennstoffzelle 20 in einen Befeuchtungsraum 15 der Befeuchtungseinheit 10. Dort wird es durch Ausperlen in einer Brennstofflösung 11 mit Dämpfen der Brennstofflösung 11 angereichert. Nachdem angereichertes Anodenfluid 54 einen oberen, mit gasförmigem Anodenfluid gefüllten Teil 12 des Befeuchtungsraums 15 passiert hat, wird es über den Auslass 14 mittels der Pumpe 59 wiederum der Brennstoffzelle 20 zugeführt. Das überschüssige Anodenfluid 51 wird hier mittels eines Wärmetauschers 56 gekühlt, wodurch Brennstofflösung 55 auskondensiert, bevor sie über aufgrund der Schwerkraft über einen Einlass 17a in einen Kondensatauffangraum 70 abgeschieden wird.

Gasförmiges Anodenfluid 52 tritt aus dem Kondensatauffangraum 70 durch eine weitere Öffnung 17b aus. Vor dem Einlass 17a und nach dem Auslass 17b sind Drosseln oder andere hydraulische Widerstände 51a, 52a angebracht, mit denen der Druck im Anodenfluidkreislauf geregelt wird. Um zu verhindern, dass Brennstofflösung 11 in den Kondensatauffangraum 70 strömt und diesen erwärmt bzw. mit Brennstoff anreichert, ist ein Verengung oder ein Kanal 18 zwischen Kondensatauffangkammer 70 und Befeuchtungsraum 10 vorgesehen. Der Kanal 18 kann einen Durchmesser beispielsweise zwischen 0,1 mm bis 4 mm aufweisen. Anstatt eines Kanals kann aber auch ein Ventil oder ein Strömungswiderstand vorgesehen sein. Die Kondensatauffangkammer 70 ist mittels geeigneter Trennwände 17c thermisch isoliert, um eine Erwärmung des Kondensats und eine damit einhergehende Verdampfung von Brennstofflösung zu minimieren. Mittels eines Lüfters 41 wird von der Brennstoffzelle 20 erwärmte Luft auf eine Wärmeaustauscherfläche 42 der Befeuchtungseinheit gelenkt.

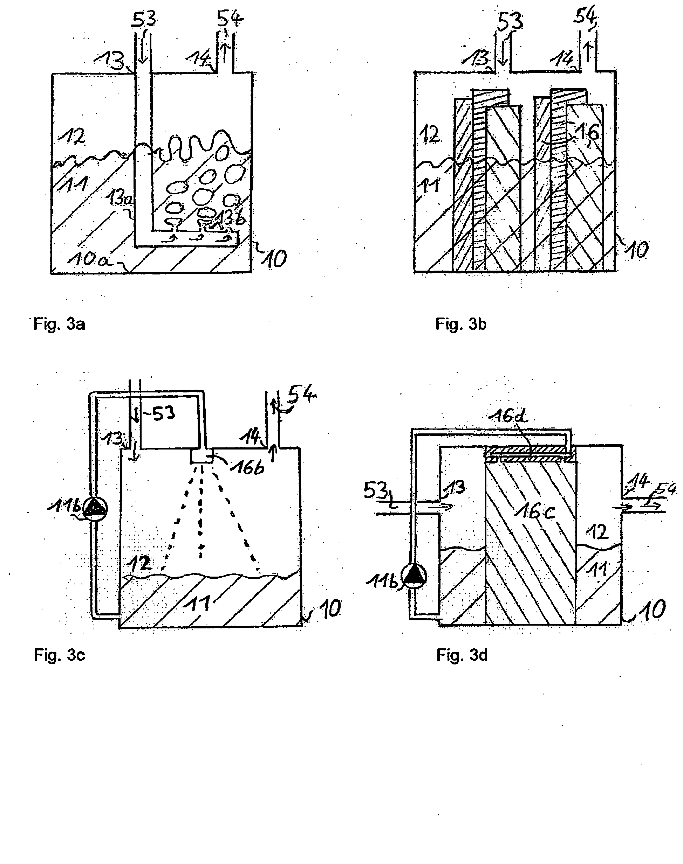

Fig. 3a zeigt eine Variante der Anreicherung des Trägergases mit Dämpfen aus der Brennstofflösung 11. Das über den Einlass 13 des Befeuchtungsraumes der Befeuchtungseinheit 10 einströmende abgereicherte Anodenfluid 53 wird mittels eines Röhrchens oder einer Rohrleitung 13a in die Nähe eines Bodens 10a des Befeuchtungsraumes unterhalb des Flüssigkeitsspiegels der Brennstofflösung 11 geleitet und dort über geeignete Ausströmlöcher 13b in die Brennstofflösung 11 eingeperlt. Dabei können Brennstoff- und Wasserdampf in den mit gasförmigem Anodenfluid gefüllten Teil 12 des Befeuchtungsraums überführt werden und der durch die Anodenreaktion hervorgerufene Brennstoffverlust ausgeglichen werden. Über den Auslass 14 verlässt das angereicherte Anodenfluid 54 die Befeuchtungseinheit 10 in Richtung Anoderaum der Brennstoffzelle.

Fig. 3b zeigt eine weitere Variante der Anreicherung des Trägergases mit Brennstoff. Gemäß dieser Ausführungsform stromt das Trägergas 53 strömt über die mit Brennstofflösung 11 befeuchteten Oberflächen von Beleuchtungskörpern 16 und wird dabei mit Brennstoff angereichert. Die kontinuierliche Befeuchtung der Oberflächen der Befeuchtungskörper 16 wird dadurch hervorgerufen, dass die hydrophilen und/oder porösen Körper 16 teilweise in die Brennstofflösung 11 getaucht sind, so dass aufgrund eines Kapillareffekts Brennstoff aus dem Brennstofflösungsvorrat 11 demjenigen Teil der Oberflächen der Befeuchtungskörper 16 transportiert wird, der sich oberhalb des Flüssigkeitsspiegels und somit in dem mit gasförmigem Anodenfluid gefüllten Teil 12 der Befeuchtungseinheit 10 befindet. Auch in diesem Fall tritt das mit Brennstoff angereicherte Anodenfluid 54 über den Auslass 14 aus der Befeuchtungseinheit aus.

Bei der in Fig. 3c gezeigten alternativen Ausführungsform der Befeuchtungseinheit 10 befördert eine Pumpe 11b die Brennstofflösung 11 aus dem unteren Bereich des Befeuchtungseinheit 10 zu einer Düse 16b, welche sich in im mit gasförmigem Anodenfluid gefüllten Teil 12 des Befeuchtungsraums 15 befindet. Diese Düse 16b, die auch durch eine Sprenkeleinrichtung ersetzt werden kann, erzeugt mit der Brennstofflösung 11 Tröpfchen, die in dem mit gasförmigem Anodenfluid gefüllten Teil 12 verteilt werden. Durch den Kontakt der Tröpfchen mit dem abgereicherten Anodenfluid 53, das über den Einlass 13 in den Befeuchtungsraum 15 strömt, wird das Anodenfluid wieder mit Brennstoffdämpfen und gegebenenfalls mit Wasserdampf angereichert.

Fig. 3d zeigt eine Variante zur Brennstoffanreicherung des Anodenfluids 53, gemäß der durch eine Pumpe 11b Brennstofflösung 11 aus dem unteren Bereich des Befeuchtungsraumes zu einer Zuführungsvorrichtung 16d gefördert wird. Diese Vorrichtung befeuchtet einen porösen Körper 16c mit Brennstofflösung 11. Der poröse Körper 16c befindet sich mit seinen oberen Teil im Bereich des mit gasförmigem Anodenfluid gefüllten Teils 12 der Befeuchtungseinheit 10. Durch den Kontakt des gasförmigen Anodenfluids 53 mit dem befeuchteten porösen Körper 16c wird das Anodenfluid mit Brennstoffdämpfen und gegebenenfalls mit Wasserdampf angereichert.

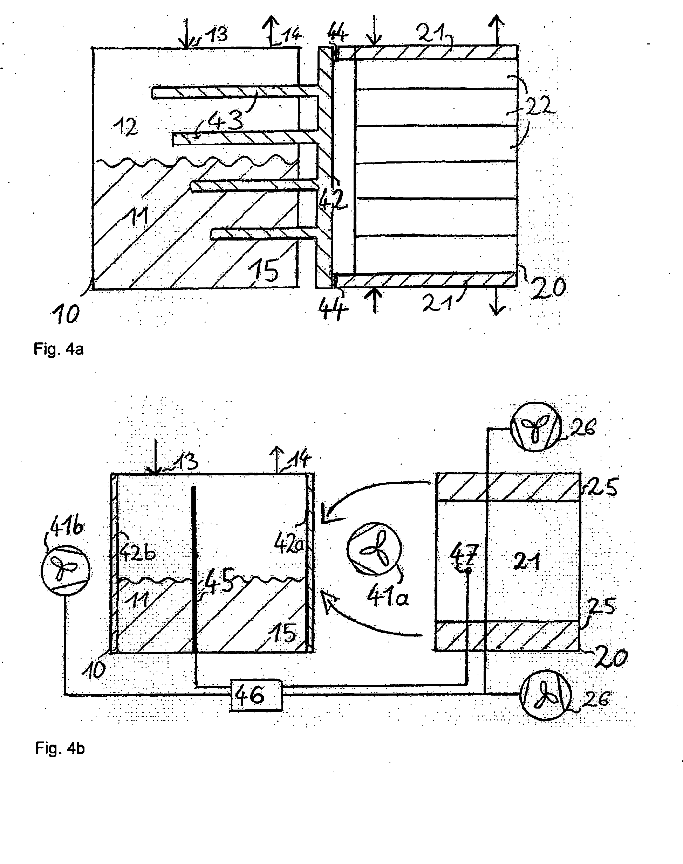

In Fig. 4a ist wiederum eine alternative Ausführungsform eines Befeuchtungsraums 15 der Befeuchtungseinheit 10 dargestellt. Auch bei dieser Ausführungsform befindet sich die Brennstofflösung 11 im unteren Teil des Befeuchtungsraumes 15, an den sich der darüberliegende, mit gasförmigem Anodenfluid gefüllte Teil 12 des Befeuchtungsraumes 15 anschließt. In der Figur ist auf der linken Seite die Brennstoffzelle 20 schematisch mit Endplatten 21 sowie Bipolarplatten 22 dargestellt. Zwischen die Befeuchtungseinheit 10 bzw. deren Befeuchtungsraum 15 und die Brennstoffzelle 20 ist eine wärmeleitende Verbindung 44 gesetzt. Diese ermöglicht einen Wärmefluss von der Brennstoffzelle 20 zum Befeuchtungsraum 15, wodurch die zur teilweisen Verdunstung der flüssigen Brennstofflösung 11 benötigte Energie in diese eingebracht wird. Mit anderen Worten werden bei dieser Ausführungsform als Wärmequelle die Endplatten 21 der Brennstoffzelle 20 genutzt.

Der Energietransfer wird durch Verwendung wärmeleitender Materialien optimiert. Hierfür sind beispielsweise metallische Werkstoffe gut geeignet. Durch eine elektrische Isolierung der wärmeleitenden Verbindung 44 kann ein Kurzschluss verhindert werden. Die Wärmeenergie wird bei dieser Ausführungsform auf eine Kollektorfläche 42 geleitet. Von dort wird sie auf Körper 43 zum Wärmeeintrag übertragen, welche in die Befeuchtungseinheit 10 hineinragen. Die Körper 43 zum Wärmeeintrag sind in ihrer Größe, Oberfläche und Lage innerhalb des Befeuchtungsraumes 15 derart gestaltet, dass sie einen höheren Energieeintrag bei hohen Füllständen und einen geringeren Energieeintrag bei niedrigen Füllhöhen bewirkten. Mithilfe des bereits beschriebenen Effekts der unterschiedlichen Wärmaufnahmen von flüssigen bzw. gasförmigen Phasen kann dieser Aufbau das Trägergas selbstregelnd befeuchten.

Fig. 4b zeigt eine weitere alternative Ausführungsform der Befeuchtungseinheit 10, welche die Brennstofflösung 11 enthält, und die Brennstoffzelle 20, wobei hier eine der Endplatten 21 der Brennstoffzelle 20 in Draufsicht dargestellt ist. An beiden Seiten der Brennstoffzelle 20 befinden sich Kühlrippen 25, die vorbeiströmende Luft erhitzen. Mithilfe eines Lüfters oder Gebläses 41a wird die Kühlluft der Brennstoffzelle 20 auf eine erste Wärmetauscherfläche 42a der Befeuchtungseinheit 10 befördert. Die Höhe des Energietransfers von der Brennstoffzelle 20 zur Befeuchtungseinheit 10 wird mittels des Gebläses 41a, das über den Messwert eines Temperatursensors und/oder Füllstandsensors 45 und eine entsprechende Steuerung 46 angesteuert wird, geregelt. Bei dieser Variante ist ein zweites Gebläse 41b vorgesehen, welches Kühlluft auf eine zweite Wärmeaustauscherfläche 42b der Befeuchtungseinheit 10 bläst, um ein schnelles Abkühlen der Befeuchtungseinheit zu ermöglichen. Auch diese Gebläse 41b wird mittels eines Sensors und einer Steuerung geregelt. Ferner sind noch zwei weitere Gebläse 26 dargestellt, die eine Temperaturregelung der Brennstoffzelle 20 mittels Temperatursensor 47 und Steuerung 46 ermöglichen, ohne die Temperaturregelung der Befeuchtungseinheit 10 zu beeinflussen. Dieser Aufbau kann auch für ein Brennstoffzellensystem verwendet werden bei dem die kritische Anodenabgastemperatur überschritten wird, also die Temperaturdifferenz zwischen Befeuchtungseinheit und Anodenraum zu hoch wird, und ein Wechsel von Wärmezuführung zu einer Kühlung der Anodenfluideinheit vollzogen werden muss.

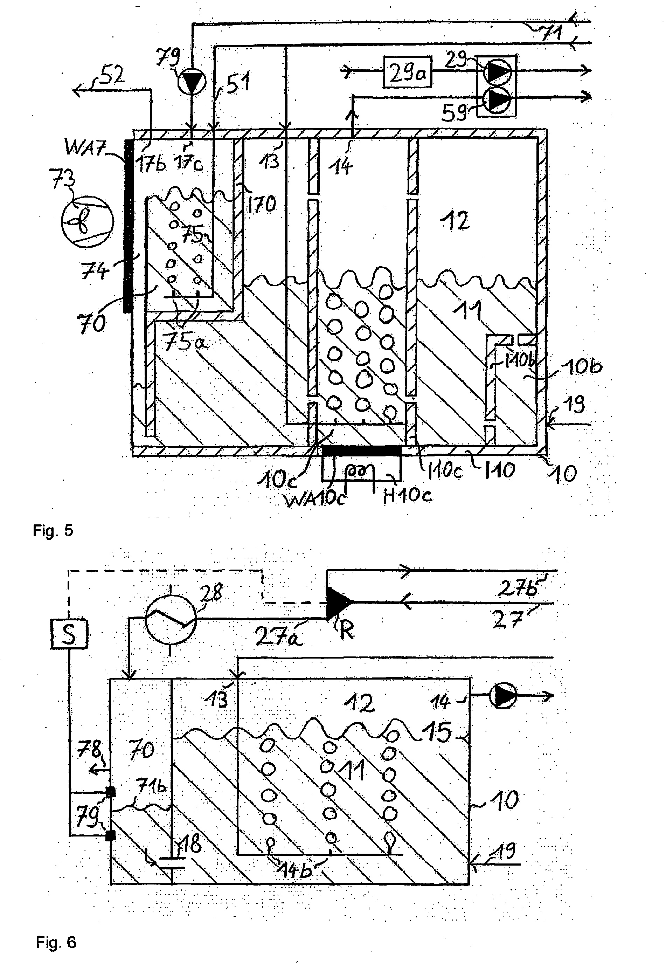

In Fig. 5 stellt eine Ausführung der Anodenfluideinheit 10 mit einer integrierten Kammer 70 für Anodenabgaswäsche dar. Um die Anodenfluideinheit 10 von äußeren Temperaturschwankungen unabhängiger zu machen ist eine Isolierung 110 vorgesehen. Bei dieser Ausführungsform wird zugeführtes Wasser, in diesem Fall Kathodenkondensat 71, genutzt, um Brennstoffdämpfe aus dem überschüssigen Anodenfluid 51 auszuwaschen. Als überschüssiges Anodenfluid wird jener Teil des Fluides bezeichnet, das aus der Anode ausströmt und aufgrund des durch die Anodenreaktion zusätzlich gebildetem Trägergas aus dem Kreislauf ausgestoßen werden muss. Nachstehend wird das zur Auswaschung verwendete Wasser als Waschwasser bezeichnet. Für den Auswaschvorgang wird das Waschwasser in die Kammer 70 über einen Einlass 17c eingeleitet, hier mittels einer Pumpe 79. Ähnlich wie bei der Dampfanreicherung wird das überschüssige Anodenfluid 51 in das Waschwasser mittels eines mit kleinen Öffnungen 75a versehenen Röhrchens 75 eingeperlt. Da das Waschwasser nur eine geringe Konzentrationen an Brennstoff aufweist, tritt der größte Teil des gasförmigen Brennstoffs durch den Kontakt mit Waschwasser in die flüssige Phase über. Das gereinigte überschüssige Anodenfluid 52 tritt über eine Auslassöffnung 17b aus der Kammer 70a aus.

Dieser Aufbau wird beispielsweise für einen Brennstoffzellenstack mit einem phosphorsauren Elektrolytsystem und einer Durchschnittsleistung von 1000 Watt bei einer Einzelzellspannung von 0,52 Volt verwendet. Die Anode wird mit einem Fluid aus der Befeuchtungseinheit 10 versorgt das folgende Molare Zusammensetzung aufweist: Methanoldampf 16%, Wasserdampf 28%, Kohlendioxid 56%, sonstige 1%. Bei 3% Methanoldiffusion zur Kathode und 70°C entspricht der Volumenstrom von 1,5 L/s einem Versorgungslambda für die Anodenreaktion von 2,5. Der Katodenvolumenstrom beträgt bei einem Versorgungslambda von 2,2 und einer Temperatur von 20°C etwa 1,7 L/s. Aufgrund der ähnlichen Volumenströme ist Doppelkopfpumpe 29, 59 vorgesehen deren Pumpenköpfe auf die unterschiedlichen Volumenströme angepasst ist.

Um den Reinigungseffekt zu verstärken, bzw. die Menge an Brennstoff im austretenden Anodenfluid 52 zu minimieren, wird die Kammer 70a für Anodenabgaswäsche mittels eines Wärmetauschers oder einer Wärmetauscherfläche WA7 und eines Kühlluftstromes, der hier durch einen Lüfter 73 bewegt wird, gekühlt. Aus diesem Grund sind die Wände 17 der Anodenabgaswäsche zum Befeuchtungsraum 10 so gestaltet, dass sie eine thermisch isolierende Wirkung gegenüber den die Brennstofflösung 11 enthaltendem Bereich der Befeuchtungseinheit 10 haben. Damit die Füllhöhe des Waschwassers unbeeinflusst von dem Füllstand der Brennstofflösung 11 ist, ist ein Überlaufrohr 74 vorgesehen. Durch dieses Überlaufrohr gelangt das Waschwasser in die Brennstofflösung 11. Über den Einlass 19 wird Brennstofflösung einem gesonderten Segment 10b der Befeuchtungseinheit 10 zugeführt. Die Brennstofflösung 11 in diesem Segment 10b ist kühler als die Brennstofflösung im Rest der Befeuchtungseinheit 10, da dem Segment 10b von außen keine Wärme zugeführt wird und es zudem durch eine thermisch isolierende Trennwand 110b an seiner Innenseite isoliert ist. Sollte die isolierende Wirkung von 110b nicht ausreichen, kann dieses Segment ähnlich wie Kammer 70 gekühlt werden.

Das Segment 10c der Anodenfluideinheit 10 in dem das Anodenfluid befeuchtet wird ist hinsichtlich der Wärmeübertragung und des Stoffaustausches teilweise isoliert. Dieses Segment 10c kann mittels einer Vorrichtung, die eine Wärmeaustauschfläche WA10c und ein Heizelement H10c enthält, beheizt werden. Eine Beheizung diese Segments 10c bietet sich insbesondere an wenn das System schnell gestartet werden muss und ein zeitaufwendigeres Aufheizen der gesamten Flüssigkeit 11 nicht erwünscht ist. Der Stofftransport bzw. dessen Einschränkung aus und in das Segment 10c kann mittels Einrichtung wie verschließbare Klappern, Blende, etc. optimiert werden.

Fig. 6 zeigt eine Ausführungsform der Befeuchtungseinheit 10, die neben dem Befeuchtungsraum 15 eine extra Kammer 70 aufweist, welche Kondensat oder Wasser aufnehmen kann. Diese Kondensatkammer 70 ist durch eine Öffnung oder einen Kanal 18 mit dem Befeuchtungsraum 15 verbunden. Fließt bei dieser Ausführungsform Kondensat in die Kondensatkammer 70, so wird es über den Kanal 18 in den Befeuchtungsraum 15 geleitet.

Der Druckverlust, der durch das Durchtreten des Anodenfluids durch Ausströmlöcher 14b beim Einleiten in die Brennstofflösung 11 hervorgerufen wird, entspricht dem Höhenunterschied zwischen dem Flüssigkeitsspiegel des Kondensats 71b und dem Flüssigkeitsspiegel der Brennstofflösung 11. Somit ist der Höhenunterschied der beiden Flüssigkeiten bei kontinuierlichen Betriebsbedingungen konstant. Durch die Lage der Ausgangsöffnung 78 in der Kondensatkammer 70b wird die Füllhöhe des Kondensats in der Kondensatkammer 70 begrenzt, da flüssiges Kondensat mit der Gasphase des Kathodenfluids im Falle entsprechender Füllhöhe über die Ausgangsöffnung 78 ausgetragen wird. Durch den konstanten Höhenunterschied der beiden Flüssigkeitssäulen wird auch die Füllhöhe in dem Befeuchtungsraum 15 begrenzt.

Bei der Ausführung sind außerdem noch Sensoren 79 vorgesehen, die eine Benetzung mit Kondensat detektieren. Die Sensoren 79 sind zum Zweck einer Regelung der Kondensatmenge angebracht. Mittels einer Steuerung S und einer Regelvorrichtung R wird bei entsprechenden Messsignalen veranlasst, dass ein größerer (oder kleinerer) Anteil des Kathodenabgases 27 über einen Wärmetauscher 28 gefördert wird und somit mehr (oder weniger) Kondensat zurückgewonnen wird. Das Kathodenabgas 27 wird also in zwei geeignete Teilströme 27a, 27b aufgeteilt, nämlich den Teilstrom 27a, der zum Wärmetauscher 28 strömt, und den Teilstrom 27b, der ungekühlt das System verlässt. Sinkt der Flüssigkeitsspiegel des Kondensats 71b, so wird der Teilstrom 27a, der dem Wärmetauscher 28 zur Kühlung zugeleitet wird, vergrößert. Dadurch kann mehr Wasser aus der Kathodenabgas 27 zurückgewonnen werden.

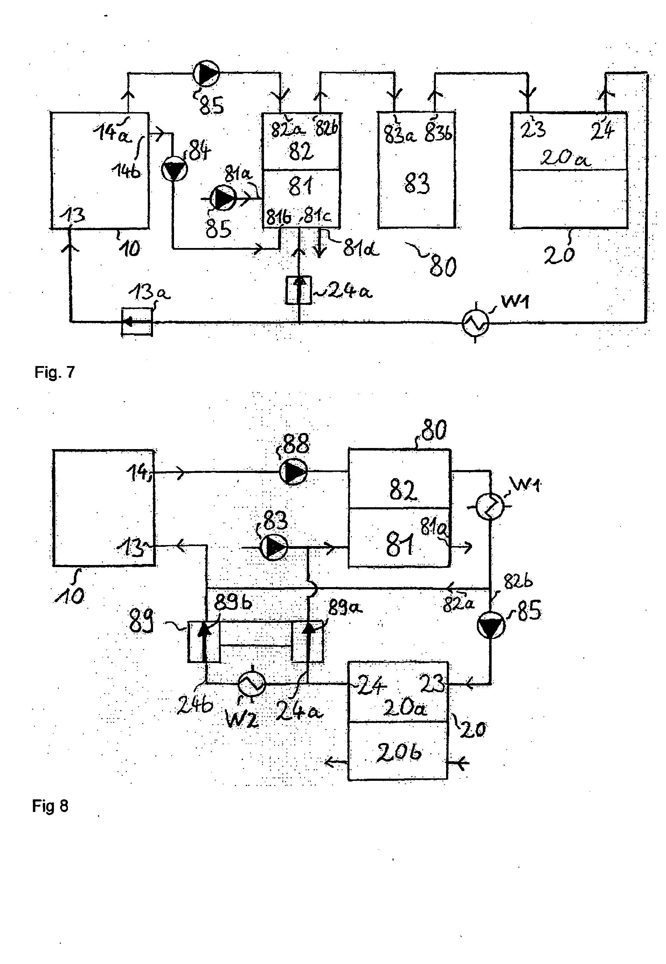

Fig. 7 zeigt eine Brennstoffzelleneinheit, gemäß der eine Reformereinheit 80 zur Erzeugung eines wasserstoffreichen Gases von einer Befeuchtungseinheit 10 versorgt wird. Die Befeuchtungseinheit 10 wird dabei zur Belieferung der Reformereinheit 80 mit Brennstoff angereichertem Trägergas verwendet. Das mit Brennstoff- und Wasserdampf angereicherte Trägergas gelangt aus dem Ausgang 14a der Befeuchtungseinheit 10 über einen Eingang 82a in den Reaktionsraum 82 eines Reformers 82. Um die für die Reformerreaktion notwendigen Temperaturen zu generieren, ist ein katalytischer Brenner 81 vorgesehen, mit welcher der Reaktionsraum 82 beheizt wird. Beim Starten des Systems wird der katalytische Brenner über eine Fördereinrichtung 84 mit Brennstoffdampf über den Auslass 14b aus der Befeuchtungseinheit 10 und zusätzlich mittels einer Fördereinrichtung 85 mit Luftsauerstoff versorgt. Das wasserstoffreiche Gas wird über den Reformerausgang 82b über einen Einlas 83a in eine Reformatgasnachbehandlungsstufe 83 geleitet. Diese Stufe dient dazu Kohlenmonoxid mittels Dampfreformierung zu oxidieren. Das Reformatgas strömt dann über den Anodeneinlass 23 zur Anodenseite 20a der Brennstoffzelle 20. Abgereichertes Anodenfluid verlässt die Brennstoffzelle 20 über den Auslass 24 und wird einem Wännetauscher W1 zur Kühlung zugeführt. Im Falle in diesem System wird ein Hochtemperaturbrennstoffzelle verwendet, wird über eine Regelung der Kühlleistung des Wärmtauschers W1 die Temperatur in der Befeuchtungseinheit 10 eingestellt. Nach dem Wärmetauscher teilt sich das Fluid auf. Ein Teilstrom passiert ein Regelventil 13a und wird dem Eingang 13 der Befeuchtungseinheit 10 wieder zugeführt. Der andere Teil des abgereicherten Anodenfluides strömt über ein Ventil 24a in den katalytischen Brenner 81. Durch eine Regelung bzw. Ansteuerung der beiden Ventile 13a und 24a können die Teilströme geeignet dimensionieren werden. Statt zwei Regelventilen können auch andere Ventile wie Rückschlagventile, Strömungswiderstände oder Pumpen eingesetzt werden. Bei entsprechenden Druckverhältnissen kann auf das Ventil 13a oder 24a verzichtet werden.

Fig. 8 zeigt eine Brennstoffzelleneinheit, gemäß der eine Reformereinheit zur Erzeugung eines wasserstoffreichen Gases 80 von einer Befeuchtungseinheit 10 versorgt wird. Die Befeuchtungseinheit 10 wird dabei zur Belieferung der Reformereinheit 80 mit Brennstoff angereichertem Trägergas verwendet. Das mit Brennstoff- und Wasserdampf angereicherte Trägergas wird mit einer Fördereinrichtung 88 aus der Befeuchtungseinheit 10 in den Reaktionsraum 82 eines Reformers 80 gefördert. Das mit Wasserstoff angereicherte Reformatgas wird einem Wärmetauscher W1 zur Kühlung zugeführt. Würde eine Hochtemperatur Brennstoffzelle (SOFC, MCFC) versorgt werden kann auf den Wärmetauscher W1 verzichtet werden. Das gekühlte Reformatgas teilt sich in zwei Teilströme 82a, 82b auf. Ein Teilstrom 82b wird über eine Fördereinrichtung oder Ventil 85 zum Anodeneinlass 23 der Brennstoffzelle 20 gefördert. Der andere Teilstrom 82a wird dem Eingang 13 der Befeuchtungseinheit 10 wieder zugeführt. Der Teilstrom 82b verlässt nach seiner Abreicherung im Anodenraum 20a die Brennstoffzelle 20 über den Auslass 24 und teilt sich wiederum in zwei Teilströme 24a, 24b auf. Der Teilstrom 24b passiert einen Wärmetauscher W2 und Regelventil 89b und wird dem Eingang 13 der Befeuchtungseinheit 10 wieder zugeführt. Da in diesem Fall der Brennstoffzellenstack mit ca. 200°C betrieben wird, ist die Wärmemenge des Abgasstromes höher als die zur Brennstoffanreicherung benötigte Verdampfungsentalphie. Daher wird im Normalbetrieb mithilfe einer Regelung der Kühlung des Abgases über Wärmetauscher W2 die Temperatur und somit der Befeuchtungsgrad in der Anodenfluideinehit geregelt. Um die für die Reformerreaktion notwendigen Temperaturen zu generieren, ist ein katalytischer oder offener Brenner 81 vorgesehen, mit welcher der Reaktionsraum 82 beheizt wird. Der Brenner 81 wird mit dem anderen Teilstrom 24a des Anodenabgases und mit Luft über eine Fördereinrichtung 83 versorgt. Der Teilstrom 24a dem Brenner 81 über das Ventil 89a zu geführt.

Die beiden Ventile 89a und 89b sind hier zu einer Regeleinheit 89 zusammengefasst. Durch eine Regelung bzw. Ansteuerung der beiden Ventile 89a und 89b können die Teilströme geeignet dimensioniert werden. Statt zwei Regelventilen können auch andere Vorrichtungen wie Strömungswiderstände oder Pumpen eingesetzt werden. Relevante Regelgrößen sind beispielsweise die Temperatur des Brenners 81 oder der Druck in der Befeuchtungseinheit 10. Der Brennwert des Anodenabgasstroms, der zur Beheizung für den Brenner 81 verwendet wird kann auch über eine höhere Brennstoffkonzentration in der Befeuchtungseinheit über eine Temperaturerhöhung oder einer Erhöhung der Brennstoffkonzentration erreicht werden. Um den Startvorgang beschleunigen kann auch eine Vorrichtung vorhanden sein, die die Abwärme des Brenners 81 oder dessen Abgas, welches über den Ausgang 81a strömt, geeigneten Wärmaufnahmeflächen an Brennstoffzellenstack 20 und/oder Anodenfluideinheit 10 zuzuführen.

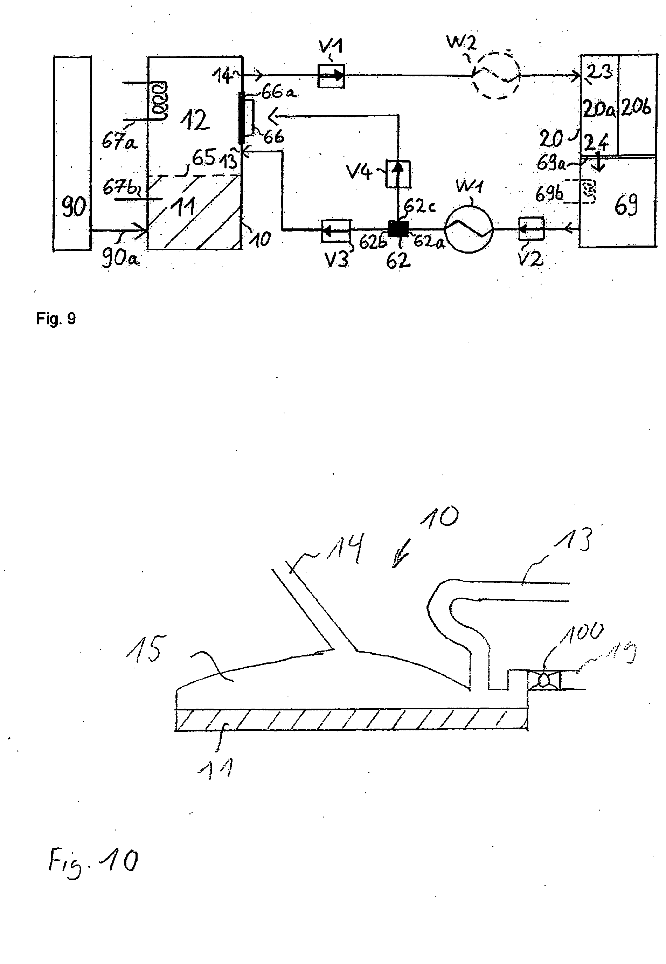

Fig. 9 zeigt ein Brennstoffzellensystem mit einem speziellen Aufbau des Anodenversorgungskreislaufes, der insbesondere für Brennstoffzellen mit kleinen Leistungen wie beispielsweise 0,1 - 5 Watt, verwendet wird. Diese Ausführungsform hält mittels Gasausdehnung durch Temperaturerhöhung und Volumenverminderung durch Abkühlung einen Kreislauf des Anodenfluids aufrecht. Dazu ist in dieser Ausführungsform als Energieverbraucher nur eine Heizvorrichtung 67a vorgesehen, die zum Erreichen der Temperatur, welche für den Betriebsstart notwendig ist, genutzt wird. Außerdem kann ein Temperaturfühler 67b eingesetzt werden, der einen Messwert in der Anodenfluideinheit erfasst. Die Anodenfluideinheit 10 wird über eine Zuleitung 90a, in diesem Fall über eine Leitung in der Mithilfe des Prinzips der kommunizierenden Röhren Brennstoff oder Brennstofflösung gefördert wird, versorgt.

Die Fluidleitung zwischen Befeuchtungseinheit 10 und Anodenraum 20a enthält ein Ein-Wege-Ventil bzw. Rückschlagventil V1, das aufgrund seiner Materialbeschaffenheit und Bauform eine Hysterese hinsichtlich Öffnungs- und Schließdruck aufweist. Nach dem Ausgang 24 des Anodenraumes 20a einer Brennstoffzelle 20 ist ein Speichervolumen 69, das mit der Brennstoffzelle 20 durch eine thermisch leitende Verbindung 69a gekoppelt ist, vorgesehen. Danach ist ein weiteres Ein-Wege-Ventil V2, ein Wärmetauscher W1, ein Abzweig 62 mit Ausgang 62b, einer Leitung zu einem Ein-Wege-Ventil V3 und Einlass 13 in die Befeuchtungseinheit 10.

Um den Öffnungsdruck von V1 (Öffnungs- und Schließdruck sind z.B. 80 und 20 mbar) zu erreichen wird in der Startphase die Heizvorrichtung 67a verwendet, die die Gasphase 12 der Befeuchtungseinheit 10 aufheizt. Das mit Brennstoff angereicherte Gas strömt nach Öffnung von V1 über Ausgang 14 der Befeuchtungseinheit 10 in den Anodenraum 20a. Dort entsteht durch die Anodenreaktion aus Kohlenstoff des Brennstoffs Kohlendioxid. Da jedoch, beispielsweise im Falle Methanol wird als Brennstoff verwendet, neben Methanol auch Wasserdampf verbraucht wird, sinkt die Teilchenanzahl am Anodenausgang 24 gegenüber dem Anodeneingang 23. Es kann sich daher erst ein Überdruck vor Ventil V2 einstellen wenn durch die Abwärme der Anodenreaktion eine Erhöhung der Temperatur auftritt die einen, durch die Abnahme von Molekühlen im Anodenraum 20a entsprechenden Druckabfall mehr als kompensiert. In der Startphase wird der Druckabfall auch aufgrund des einströmenden Anodenfluids aus der Befeuchtungseinheit 10 kompensiert. Für Brennstoffzellen die nicht für eine Druckerhöhung genügend Abwärme beim Startvorgang produzieren kann eine weitere Heizvorrichtung 69b (gestrichelt) zur Temperatur und Druckerhöhung für den Startbetrieb vorgesehen werden.

Nachdem V1 sich wieder schließt und der Druck im Anodenraum 20a bzw dem Raum 69 genügend stark angestiegen ist, wird V2 (Öffnungs- und Schließdruck sind z.B. 80 und 20 mbar) geöffnet und abgereichertes Anodenfluid gelangt in den Wärmetauscher W1. Bereits gekühltes Fluid strömt aus Wärmetauscher W1 in die Abzweigung 62 von dessen Öffnung 62b ein Teilstrom über das Ventil V3, das einen sehr geringen Öffnungsdruck (z.B. 10 mbar) aufweist, in den oberen Teil der Befeuchtungseinheit 10. Das Ventil V3 oder deren Anschlussleitung kann einen geeigneten Strömungswiderstand aufweisen. Der Teil strömt über Ausgang 62c zu einem Ein-Wege-Ventil V4 (Öffnungs- und Schließdruck sind z.B. 30 und 20 mbar). Dieser so abgezweigte Teilstrom enthält das in der Anodenreaktion zusätzlich produzierte Kohlendioxid. Da dieser Teilstrom noch Brennstoff enthält ist er geeignet zum Beheizen von Gasen in der Befeuchtungseinheit 10. Dazu dieses Abgas auf einen geeignetem katalytischen Brenner 66 geströmt. Der Brenner 66 wird außerdem mit Luft angeströmt. Der Brennstoff kann unter Wärmeabgabe mit Luftsauerstoff oxidiert werden. Der Brenner 66 ist zur Wärmeübertragung in die Gasphase 12 des Befeuchtungsraums 10 an eine Vorrichtung 66a, angebracht. Diese Vorrichtung 66a ist in Material. Masse und Fläche derart dimensioniert, dass möglichst viel Wärme abgegeben wird nachdem V2 geschlossen ist bzw. bevor V1 geöffnet wird.

Solange V2 und V3 geöffnet sind strömt Anodenfluid aus dem Gasspeicher 69 in den Wärmtauscher W1 und kühlt ab. Bereits gekühltes Anodenfluid strömt über V3 in die Befeuchtungseinheit 10. Durch das Ausströmen in den Befeuchtungsraum sinkt der Druck vor Ventil V2 wieder, das schließt nachdem der Schließdruck unterschritten wird.

Durch die Wärmezuführung von der Vorrichtung zur Wärmeübertragung 66a erhöht sich die Temperatur des Anodenfluids in der Befeuchtungskammer und reichert das Anodenfluid mit Dämpfen an. Aufgrund steigender Temperatur und steigender Gasmenge steigt der Druck im Befeuchtungsraum bis V1 wiederum geöffnet wird, worauf das Brennstoff angereichertes Anodenfluid wieder in den Anodenraum 20 strömt wo es wiederum erhitzt wird. Das System kann nun so konstant über einen so geschaffenen Kreislauf die Brennstoffzelle mit angereichertem Anodenfluid versorgen. Wird nach Abschalten der Brennstoffzelle kein Kohlendioxid mehr produziert und folglich kein überschüssiges Anodenabgas mehr auf den katalytischen Brenner abgegeben, kühlt die Anodenfluideinheit 10 ab und der Anodenfluidkreislauf stoppt.

In diesem Aufbau der Befeuchtungseinheit 10 kann auch eine Membran 65 vorgesehen sein (hier gestrichelt dargestellt) die den Raum der flüssigen Brennstoffphase 11 mit dem der Dampfphase 12 trennt. Diese Membran kann aus Silikon oder einem Polymer bestehen. Mithilfe dieser Membran kann die Anreicherung des Anodenfluides mit Brennstoff beeinflusst werden. Die Membran kann an geeigneter Stelle Öffnungen zur Entgasung aufweisen. Anstatt einer Membran kann auch ein Schwamm der die Brennstofflösung aufnimmt verwendet werden.

Das Ventil V4 kann ein Ventil sein, das aufgrund einer Hysterese und aufgrund von Druckschwankungen ein zeitlich beschränktes Öffnen aufweist. Das Ventil V4 kann aber auch in den Abzweig 62 integriert sein. Diese Integration kann mittels einem Raum der drei Öffnungen (62a, 62b, 62c) aufweist und einem beweglichen Körper wie einer Kugel aufweisen geschaffen werden. Der Raum kann ein aufrechter zylindrischer Holraum mit einem geringfügig größeren Durchmesser als die Kugel sein. Der Raum hat am Boden die Einlassöffnung 62a, an einer Seitenwand die Auslassöffnung 62b, und oben die Auslassöffnung 62c. Die Kugel, wird bei einer Anströmung durch den über den Öffnungsdruck von V2 definierten Strömungsdruck nach oben gedrückt. Sie verschließt den Durchgang nachdem die, durch das Volumen des Zylinders definierte Anodenfluidmenge durch die Öffnung 62c entwichen ist. Die Kugel schließt aufgrund einer minimalen Undichtigkeit den Ventilsitz nicht vollständig ab, sodass sie wieder nach unten auf Öffnung 62a fällt wenn Ventil V2 wieder schließt. Dadurch wird eine definierte Gasmenge dem Brenner 66 zugeführt.

Der Wärmetauscher W1 ist derart dimensioniert, dass das Anodenfluid soweit abgekühlt wird, dass dessen Temperatur unter jener der Brennstoffzellenlösung gesenkt wird aber immer nach derart hoch ist, dass dem Anodenfluid nur so viel thermische Energie entzogen wird, dass es durch die Befeuchtungseinheit wieder auf die geeignete Temperatur gebracht werden kann. Der Wärmetauscher kann beispielsweise nur ein Metallrohr mit Kühlrippen sein und ein geeignet großes Volumen aufweisen. Soll ein Auskondensieren von Dämpfen vor V4 verhindert werden, oder mehr Brennstoff dem katalytischen Brenner verfügbar gemacht werden, kann der Wärmetauscher W1 auch zwischen der Abzweigung A1 und dem Ventil V3, oder nach V3 positioniert sein. Um den Volumenstrom im Anodenfluidkreislauf zu erhöhen kann ein weiterer Wärmetauscher W2 zwischen Ventil V1 und Brennstoffzelle 20 eingebracht werden. Um das Umlaufverhalten zu beeinflussen können auch ein oder mehrere flexible Druckbehälter verwendet werden die sich bei Überdruck füllen und bei absinkendem Druck entleeren können. Es kann zusätzlich eine regelbare Wärmeleitung zwischen Brennstoffzelle und Befeuchtungseinheit 10 vorgesehen sein um Verdampfungsenthalpie durch Abwärme der Brennstoffzelle zu kompensieren.

Wenn auf der Anodenseite der Brennstoffzelle genügend Brennstoff gespeichert werden kann, wird durch den Start des Lastbetriebs Wärme frei, was eine Druckerhöhung im Anodenraum 20a bewirkt, und ein Initiierung des Kreislaufs ermöglicht. In diesem Falle könnte auf die Heizvorrichtung 67a verzichtet werden. Eine andere Startmöglichkeit bzw. Möglichkeit einer Beheizung des Anodenraums 20a ist auch bei Systemen gegeben, die eine aktive Luftzuführung aufweisen und bei dessen Start ein vom Anodenraum 20a in den Kathodenraum 20b diffundierter Brennstoff unter Wärmeentwicklung oxidiert.

Wenn es sich bei solchen Systemen mit niedriger Leistung um Niedertemperatur Brennstoffzellen handelt, wird das System derart ausgelegt, das die Temperatur der Brennstoffzelle dennoch höher als die der Anodenfluideinheit ist. Dazu werden die Wärmeaustauscherflächen von W1, W2, 66a und Kühlflächen der Brennstoffzelle 20 derart dimensioniert, dass das Anodenfluid durch die Reaktionsabwärme der Anodenreaktion eine Temperaturerhöhung von beispielsweise 3-20°C erfährt. Diese Temperaturerhöhung vergrößert das Anodenfluidvolumen am Ausgang des Anodenraums 24 gegenüber dem in den Anodenraum 20a einströmenden Anodenfluids auch im Falle die Gasmenge nimmt durch die Anodenreaktion ab.

Nachfolgend wird ein weiteres Ausführungsbeispiel einer erfindungsgemäßen Befeuchtungseinheit 10 erläutert, das besonders einfach ausgebildet ist. Dieses Ausführungsbeispiel weist eine als hohler Behälter ausgebildete Beleuchtungseinheit 10 auf, wobei der Behälter mit einer großen Grundfläche versehen und relativ flach gebaut ist. Der Behälter weist einen Gaseinlass 13 zum Zuführen von abgereichertem Trägergas und einen Flüssigkeitseinlass 19 zum Zuführen von einer Brennstoff enthaltenden Flüssigkeit auf.

Im Flüssigkeitseinlass 19 ist ein Rückschlagventil 100 vorgesehen, das verhindert, das Flüssigkeit durch den Flüssigkeitseinlass 19 aus dem Behälter austreten kann.

Der Behälter weist einen dom- oder kuppelförmigen Deckel auf, an dessen höchstem Bereich ein Brennstoffauslass 14 zum Abführen von mit Brennstoff angereichertem Trägergas ausgebildet ist.

Aufgrund der großen Grundfläche des Behälters besteht eine ebenso große Grenzfläche zwischen der Flüssigkeit und dem Trägergas. Unterliegt der Behälter Erschütterungen, so werden in der Flüssigkeit Wellen erzeugt, die die Grenzfläche noch mal vergrößern. Aufgrund der großen Grenzfläche wird die Verdunstung mit hoher Effizienz ausgeführt.

Da der Deckel dom- bzw. kuppelförmig ausgebildet ist besteht selbst bei einer sich im Behälter bewegenden Flüssigkeit nicht die Gefahr, dass durch den Brennstoffauslass Flüssigkeit austritt.

Die Form des in Figur 10 gezeigten Behälters ist so gestaltet, dass der Behälter erheblich geneigt werden kann, ohne dass bei einem vorbestimmten Füllstand von Flüssigkeit diese unerwünscht bei den Einlässen bzw. dem Auslass austritt.

Der Füllstand wird so eingestellt, dass die Flüssigkeit, bei einer horizontalen oder geringfügig von der horizontalen abweichenden Stellung des Behälters, den Boden des Behälters im wesentlichen abdeckt. Der Flüssigkeitsstand darf keinesfalls bis in den Bereich der domförmigen Wölbung des Deckels reichen, damit im Betrieb sichergestellt ist, dass die Flüssigkeit nicht durch den Auslass austritt.

Diese Befeuchtungseinheit kann mit einer Temperiereinrichtung zum Einstellen der Flüssigkeit auf eine vorbestimmte Temperatur unterhalb ihres Siedepunktes versehen sein. Diesbezüglich wird auf die oben erläuterten Ausführungsbeispiele verwiesen.

In einer einfachen Ausführungsform kann eine solche Temperiereinrichtung weggelassen werden und alleine die im von der Brennstoffzelle kommenden abgereicherten Trägergas enthaltene Wärme zum Temperieren der Flüssigkeit verwendet werden. Ob dies genügt hängt vom Anwendungsfall der Brennstoffzelle und der im Trägergas enthaltenen Wärme ab. Es kann zweckmäßig sein den Behälter aus Kunststoff oder einem anderen gut wärmeleitenden Material auszubilden. Falls die Gefahr einer Überhitzung besteht müsste eine Kühlung des Behälter vorgesehen sein, die bspw. mittels eine Luftgebläses erfolgen kann. Dieses Luftgebläse würde dann eine Temperiereinrichtung darstellen.

Mithilfe der Erfindung kann die Komplexität der Einrichtungen zur Erzeugung eines gasförmigen Anodenfluids gering gehalten werden, was das Systemvolumen verringert und die Herstellungskosten reduziert.

Die dargestellten Ausführungsformen dienen lediglich der Veranschaulichung der Erfindung sowie der ihr zugrunde liegenden Prinzipien. Sie haben daher keine einschränkende Bedeutung. Die verschiedenen dargestellten Verfahrensschritte und Elemente können auch auf andere als die dargestellte Weise kombiniert werden.

Die vorliegende Erfindung kann auch auf Brennstoffzellen angewendet werden die sowohl kohlenstoffhaltige Brennstoffe an ihrer Anode direkt umsetzen als auch innerhalb der Brennstoffzelle über eine Dampfrefonnation Wasserstoff gewinnen. Eine solche Brennstoffzelle ist für eine Hochtemperatur-PEMFC in DE 19 945 667 C2 beschrieben.

Ferner kann die Erfindung auch in Systemen mit einer Festoxidbrennstoffzelle (SOFC, solid oxide fuel cell) oder einer Schmelzcarbonatbrennstoffzelle (MCFC, molton carbonate fuel cell) angewendet werden. Eine Anwendung der Brennstoffversorgung mit dem erfindungsgemäßen Verfahren ist vor allem dann sinnvoll, wenn diese Systeme einen Reformer aufweisen der mit Wasserdampf und Brennstoffdampf versorgt wird. Das Versorgungsprinzip ist auch geeignet wenn über eine interne Dampfreformierung in der Brennstoffzelle, beispielsweise mittels geeigneter bifunktionaler Katalysatoren oder mittels zusätzlicher Katalysatoren, Wasserstoff gewonnen wird.

Die hier beschriebene neue Anodenversorgung kann für die dargestellten Brennstoffzellensysteme dann eingesetzt werden wenn ihr Brennstoff in flüssiger Form vorliegt. Besonders geeignet ist die Erfindung wenn der Brennstoff wasserlöslich ist und der Anode oder dem Reformer neben gasförmigen Brennstoff auch Wasserdampf zugeführt werden soll. Als Brennstoffe eignen sich für diese Versorgungseinrichtung Brennstoffe wie beispielsweise Alkohole. Carbonsäuren, Kohlenwasserstoffe.

Die Erfindung kann auch in den in der Anmeldung erwähnten Brennstoffzellensystemen, mit anderen Brennstoffen, direkt oder über Reformer betrieben werden.

Weiterhin kann die erfindungsgemäße Befeuchtungseinheit auch in Verbindung mit aus dem Stand der Technik bekannten Verdampfern verwendet werden. Hierdurch lässt sich eine besonders hohe Befeuchtung oder Brennstoffkonzentration erreichen. Dabei wird eine bestimmte Menge an Wasser oder Brennstoff oder Brennstofflösung vor der Brennstoffzelle zusätzlich verdampft. Da diese Menge unter dem Bedarf der Zelle liegt sind die Vorteile der Befeuchtungseinheit noch erhalten, da diese immer noch ein vorkonditioniertes bzw. vorangereichertes Anodenfluid zur Verfügung stellt.

Wie Eingangs bereits erläutert worden ist kann bei einer weniger optimalen Ausführungsform auch ein Verdampfer verwendet werden. Bei den oben erläuterten Ausführungsbeispielen kann die Befeuchtungseinheit durch einen Verdampfer ausgetauscht werden. Hierbei müssen dann zusätzliche Mittel zur Steuerung bzw. Regelung der Brennstoffmenge vorgesehen werden. Diese Mittel umfassen z.B. Sensoren zur Detektion der Brennstoffkonzentration im angereicherten Trägergas.

## Patentansprüche

1. Befeuchtungseinheit zum Bereitstellen eines Brennstoff und Wasserdampf enthaltenden Trägergases zur Versorgung einer Brennstoffzelle (20) umfassend
einen Befeuchtungsraum (15), der zum Aufnehmen einer Brennstoff enthaltenden Flüssigkeit ausgebildet ist,
einen in den Befeuchtungsraum (15) mündenden Einlass (19) zum Zuführen einer Brennstoff enthaltenden Flüssigkeit,
einen weiteren in den Befeuchtungsraum mündenden Einlass (13) zum Zuführen eines Trägergases, derart, dass das Trägergas im Befeuchtungsraum (15) mit der Flüssigkeit in Kontakt steht,
einen Auslass zum Ausgeben des gasförmigen Brennstoff enthaltenden Trägergases, wobei eine Steuereinrichtung vorgesehen ist, die die Brennstoff enthaltende Flüssigkeit im Befeuchtungsraum auf einer Temperatur unterhalb ihres Siedepunkts einstellt,
**dadurch gekennzeichnet,**
**dass** die Steuereinrichtung derart ausgebildet ist, dass eine Regelung der Dampfdrücke von Brennstoff- und Wasserdampf (12) durch Abstimmung von Brennstoffkonzentration und Temperatur der Brennstoff enthaltenden Flüssigkeit (11) erfolgt.

2. Befeuchtungseinrichtung nach Anspruch 1,
**dadurch gekennzeichnet,**
**dass** die Befeuchtungseinheit (10) eine Einrichtung zum Anreichern des Trägergases mit Brennstoff und/oder Wasser, wie z.B. einen in der Flüssigkeit endenden Gaseinlass (13a, 13b), eine Sprenkeleinrichtung zum Zuführen der Flüssigkeit und/oder einen porösen Befeuchtungskörper (16), der sich vom Bereich der Flüssigkeit in den Bereich des Trägergases erstreckt, umfasst, wobei durch die Einrichtung zum Erhöhen einer Grenzfläche das gasförmige Trägergas mit Brennstoff aus der Brennstoff enthaltenen Flüssigkeit angereichert wird.

3. Befeuchtungseinheit nach Anspruch 1 oder 2,
**dadurch gekennzeichnet,**
**dass** eine Temperiereinrichtung, zum Heizen und/oder Kühlen der Brennstoff enthaltenden Flüssigkeit vorgesehen ist.

4. Befeuchtungseinheit nach einem der Ansprüche 1 bis 3,
**dadurch gekennzeichnet,**
**dass** die Befeuchtungseinheit derart mit einem katalytischen Brenner verbunden ist, dass das Brennstoff enthaltende gasförmige Trägergas zunächst mit Luft gemischt und dann dem katalytischen Brenner zugeführt wird.

5. Brennstoffzelleneinheit mit einer Befeuchtungseinheit nach einem der Ansprüche 1 bis 4 umfassend, eine Brennstoffzelle (20) mit einem Eingang zum Zuführen von mit Brennstoff angereichertem Trägergas und einem Ausgang zum Ableiten des vom Brennstoff abgereicherten Trägergases, wobei der Ausgang direkt mit dem Einlass (13) zum Zuführen des Trägergases der Befeuchtungseinheit (10) verbunden ist.

6. Brennstoffzelleneinheit nach Anspruch 5,
**dadurch gekennzeichnet,**
**dass** in einer Rohrleitung zwischen einem Auslass (14) der Befeuchtungseinheit (10) und einem Eingang der Brennstoffzelle (20) ein Reformer geschaltet ist oder ein interner Reformer vorgesehen ist, der derart ausgebildet ist, dass der Brennstoff zumindest teilweise in Wasserstoff umgesetzt wird.

7. Brennstoffzelleneinheit nach nach Anspruch 5 oder 6,
**dadurch gekennzeichnet,**
**dass** die Befeuchtungseinheit eine Temperiereinrichtung aufweist, die als eine Heizeinrichtung (40, 41, 42) zum Wärmetausch zwischen der Brennstoffzelle (20) und der Befeuchtungseinheit (10) oder eine Kühleinrichtung (W1, 41b, 42b) ausgebildet ist.

8. Brennstoffzelleneinheit nach einem der Ansprüche 5 bis 7,
**dadurch gekennzeichnet,**
**dass** der Befeuchtungsraum (15) in Kammern segmentiert ist.

9. Brennstoffzelleneinheit nach einem der Ansprüche 5 bis 8,
**dadurch gekennzeichnet,**
**dass** die Steuereinrichtung derart ausgebildet ist, dass eine Zudosiermenge des Brennstoffes in die Befeuchtungseinheit (10) aufgrund von Kenngrößen der Brennstoffzelle wie Stromstärke und/oder Temperatur und/oder mittels eines Füllstandsmessers (45) ermittelten Füllstandes in der Befeuchtungseinheit (10) und/oder aufgrund der Temperatur in der Befeuchtungseinheit geregelt wird.

10. Brennstoffzelleneinheit nach einem der Ansprüche 5 bis 9,
**dadurch gekennzeichnet,**
**dass** die Brennstoffzelle eine Hochtemperaturbrennstoffzelle ist.

11. Verfahren zum Bereitstellen eines Brennstoff enthaltenden Trägergases bei dem in einer Befeuchtungseinheit, welche teilweise mit einer Brennstoff enthaltenden Flüssigkeit gefüllt ist,
die Brennstoff enthaltende Flüssigkeit in einer Temperatur unterhalb ihres Siedepunkts gehalten wird, das Trägergas im Befeuchtungsraum (15) mit der Flüssigkeit in Kontakt gebracht wird, wodurch das Trägergas mit dem Brennstoff angereichert wird, und
das mit Brennstoff angereicherte Trägergas bereitgestellt wird,
**dadurch gekennzeichnet,**
**dass** das Trägergas Wasserdampf enthält, wobei eine Regelung der Dampfdrücke von Brennstoff- und Wasserdampf (12) durch Abstimmung von Brennstoffkonzentration und Temperatur der Brennstoff enthaltenden Flüssigkeit (11) erfolgt.

12. Verfahren nach Anspruch 11,
**dadurch gekennzeichnet,**
**dass** das Trägergas über eine Einrichtung zum Anreichern des Trägergases mit der Brennstoff enthaltenen Flüssigkeit in Kontakt gebracht wird wodurch das Trägergas mit der Brennstoff enthaltenden Flüssigkeit angereichert wird.

13. Verfahren zur Versorgung einer Brennstoffzelle (20) mit einem Brennstoff enthaltendem Trägergas unter Verwendung eines Verfahrens nach Anspruch 11 oder 12, wobei
das gasförmige Brennstoff enthaltende Trägergas der Brennstoffzelle (20) zugeführt wird und zumindest ein Teil des in der Brennstoffzelle abgereicherten gasförmigen Trägergases von der Brennstoffzelle (20) direkt der Befeuchtungseinheit (10) als Trägergas zugeführt wird, so dass das Brennstoff enthaltende Trägergas in einem Kreislauf zwischen der Brennstoffzelle (20) und der Befeuchtungseinheit (10) geführt wird.

14. Verfahren nach Anspruch 13 ,
**dadurch gekennzeichnet,**
**dass** eine Steuerung der Temperatur der Brennstoff enthaltenden Flüssigkeit (11) auf der Basis mindestens eines der folgenden Parameter erfolgt: Temperatur der Brennstoff enthaltenden Flüssigkeit (11), Temperatur der Brennstoffzelle (20), Feuchtigkeit eines Kathodenabgases (27), Protonenleitfähigkeit des Elektrolytsystems, Konzentration des Brennstoffs in der Brennstoff enthaltenden Flüssigkeit (11), Ausgangsspannung der Brennstoffzelle bzw. des Brennstoffzellenstacks (20) oder einer von der Stromstärke der Brennstoffzelle abgeleiteten Regelgröße.

15. Verfahren nach Anspruch 13 oder 14,
**dadurch gekennzeichnet,**
**dass** ein Kathodenabgas (27) der Brennstoffzelle (20) in zwei Teilströme (27a; 27b) aufgeteilt wird und mittels einer Steuereinrichtung in Abhängigkeit vom Füllstand und/oder der Temperatur der Befeuchtungseinheit die Volumenströme der beiden Teilströme eingestellt aufgeteilt werden, wobei einer der Teilströme das System ungekühlt verlässt und der andere der Teilströme mittels eines Wärmetauschers (28) gekühlt wird und das bei der Kühlung entstehende Kondensat des anderen Teilstromes der Befeuchtungseinheit (10) direkt oder einer separaten Kammer (70; 70a; 70b) innerhalb der Befeuchtungseinheit (10) zum Auffangen des Kondensats zugeführt wird.

## Claims

1. Humidification unit to supply carrier gas containing fuel and water vapour to feed a fuel cell (20) comprising
a humidification chamber (15), which is designed for the storage of a liquid containing fuel,
an inlet (19) leading into the humidification chamber (15) to feed a liquid containing fuel,
a further inlet (13) leading into the humidification chamber to feed a carrier gas, in such a way that the carrier gas in the humidification chamber (15) is in contact with the liquid,
an outlet for the release of the carrier gas containing gaseous fuel, wherein
a control unit is provided to keep the liquid containing fuel in the humidification chamber at a temperature below its boiling point,
**characterized in that**
the control unit is designed such that the vapour pressures of fuel and water vapour (12) are regulated by adjusting fuel concentration and temperature of the liquid containing fuel (11).

2. Humidification unit according to claim 1,
**characterised in that**
the humidification unit (10) has a device for enriching the carrier gas with fuel and/or water, such as e.g. a gas inlet (13a, 13b) terminating in the liquid, a sprinkler to feed the liquid, and/or a porous humidifying body (16) extending from the area of the liquid into the area of the carrier gas, wherein by means of the device or increasing a boundary surface, the gaseous carrier gas is enriched with fuel from the fuel-containing liquid.

3. Humidification unit according to claim 1 or 2,
**characterised in that**
a tempering device is provided for the heating and/or cooling of the liquid containing fuel.

4. Humifidication unit according to any of claims 1 to 3,
**characterised in that**
the humifidication unit is related to a catalytic burner such that the gaseous carrier gas containing fuel is mixed with air at first and then transported to the catalytic burner.

5. Fuel cell unit with a humidification unit according to any of claims 1 to 4, comprising
a fuel cell (20) with an inlet for the feeding of carrier gas enriched with fuel, and an outlet for the discharge of fuel-depleted carrier gas, wherein the outlet is connected directly to the inlet (13) for supplying the carrier gas to the humidification unit (10).

6. Fuel cell unit according to claim 5,
**characterised in that**
in a pipe, interposed between an outlet (14) of the humidification unit (10) and an inlet of the fuel cell (20), is a reformer designed or is an internal reformer provided so that the fuel is converted at least partly into hydrogen.

7. Fuel cell unit according to claim 5 or 6,
**characterised in that**
the humidification unit has a tempering device which is designed as a heating device (40, 41, 42) for heat exchange between the fuel cell (20) and the humidification unit (10), or a cooling device (W1, 41b, 42b).

8. Fuel cell unit according to any of claims 5 to 7,
**characterised in that**
the humidification chamber (15) is separated into small chambers.

9. Fuel cell unit according to any of claims 5 to 8,
**characterised in that**
the control unit is so designed that the amount of fuel fed into the humidification unit (10) is regulated based on fuel cell parameters such as current intensity and/or temperature and/or the fill level in the humidification unit (10) determined by a level sensor (45) and/or the temperature in the humidification unit.

10. Fuel cell unit according to any of claims 5 to 9,
**characterized in that**
the fuel cell is a high temperature fuel cell.

11. Process for the provision of a carrier gas containing fuel in which, in a humidification unit which is partly filled with a fuel-containing liquid,
the fuel-containing liquid is held at a temperature below its boiling point,
the carrier gas in the humidification chamber (15) is brought into contact with the liquid, by which means the carrier gas is enriched with the fuel, and
the carrier gas enriched with fuel is made available,
**characterized in that**
the carrier gas contains water vapour whereby the vapour pressures of fuel and water vapour (12) are regulated by adjusting fuel concentration and temperature of the liquid containing fuel (11).

12. Process according to claim 11,
**characterised in that**
the carrier gas is brought into contact with the fuel-containing liquid via a device for enriching the carrier gas, by which means the carrier gas is enriched by the fuel-containing liquid.

13. Process for the supply of a fuel cell (20) with a fuel-containing carrier gas using a process according to claim 11 or 12, wherein
the gaseous fuel-containing carrier gas is fed to the fuel cell (20) and at least a portion of the gaseous carrier gas depleted in the fuel cell is fed from the fuel cell (20) directly to the humidification unit (10) as carrier gas, so that the fuel-containing carrier gas is circulated between the fuel cell (20) and the humidification unit (10).

14. Process according to claim 13,
**characterised in that**
control of the temperature of the fuel-containing liquid (11) is effected on the basis of at least one of the following parameters:
temperature of the fuel-containing liquid (11), temperature of the fuel cell (20), humidity of a cathode exhaust gas (27), proton conductivity of the electrolyte system, fuel concentration in the fuel-containing liquid (11), initial voltage of the fuel cell or fuel cell stack (20), or a control variable derived from the current intensity of the fuel cell.

15. Process according to claim 13 or 14,
**characterised in that**
a cathode exhaust gas (27) of the fuel cell (20) is divided into two branch flows (27a; 27b) and the volume flow rates of the two branch flows are set by means of a control unit depending on fill level and/or the temperature of the humidification unit, wherein one of the branch flows leaves the system uncooled, and the other branch flow is cooled by means of a heat exchanger (28), and the condensate of the other branch flow produced during cooling is fed to the humidification unit (10) directly or to a separate chamber (70; 70a; 70b) for the collection of condensate within the humidification unit (10).

## Revendications

1. Unité d'humidification pour préparer un gaz porteur contenant un combustible et de la vapeur d'eau pour l'alimentation d'une pile à combustible (20), comprenant
une chambre d'humidification (15), qui est réalisée pour recevoir un liquide contenant un combustible,
une entrée (19) qui débouche dans la chambre d'humidification (15), pour l'alimentation d'un liquide contenant un combustible,
une autre entrée (13) qui débouche dans la chambre d'humidification pour l'alimentation d'un gaz porteur, de telle façon que le gaz porteur est en contact avec le liquide dans la chambre d'humidification (15),
une sortie pour délivrer le gaz porteur contenant un combustible sous forme gazeuse,
dans laquelle il est prévu un système de commande qui tient le liquide contenant le combustible dans la chambre d'humidification à une température au-dessous de son point d'ébullition,
**caractérisée en ce que**
le système de commande est réalisé de telle façon qu'il se produit une régulation des pressions de vapeur de la vapeur de combustible et de la vapeur d'eau (12) par ajustement de la concentration en combustible et de la température du liquide (11) contenant le combustible.

2. Unité d'humidification selon la revendication 1,
**caractérisée en ce que** l'unité d'humidification (10) comprend un moyen pour enrichir le gaz porteur en combustible et/ou en eau, comme par exemple une entrée de gaz (13a, 13b) qui se termine dans le liquide, un système de pulvérisation pour alimenter le liquide et/ou un corps d'humidification poreux (16), qui s'étend depuis la région du liquide jusque dans la région de gaz porteur, et dans laquelle le gaz porteur sous forme gazeuse est enrichi en combustible provenant du liquide contenant le combustible au moyen d'un système pour augmenter une surface limite.

3. Unité d'humidification selon la revendication 1 ou 2,
**caractérisée en ce qu'**il est prévu un dispositif de températion, pour chauffer et/ou refroidir le liquide contenant le combustible.

4. Unité d'humidification selon l'une des revendications 1 à 3,
**caractérisée en ce que** l'unité d'humidification est reliée à un brûleur catalytique de telle façon que le gaz porteur sous forme gazeuse qui contient le combustible est tout d'abord mélangé avec de l'air et est ensuite alimenté au brûleur catalytique.

5. Unité de pile à combustible comprenant une unité d'humidification selon l'une des revendications 1 à 4, comprenant une pile à combustible (20) avec une entrée pour alimenter un gaz porteur enrichi en combustible, et une sortie pour évacuer le gaz porteur enrichi en combustible, dans laquelle la sortie est reliée directement à l'entrée (13) pour alimenter le gaz porteur à l'unité d'humidification (10).

6. Unité de pile à combustible selon la revendication 5,
**caractérisée en ce qu'**un reformeur est branché entre une sortie (14) de l'unité d'humidification (10) et une entrée de la pile à combustible (20), ou **en ce qu'**il est prévu un reformeur interne qui est réalisé de telle façon que le combustible est converti au moins partiellement en hydrogène.

7. Unité de pile à combustible selon la revendication 5 ou 6,
**caractérisée en ce que** l'unité d'humidification comprend un système de températion qui est réalisé comme un moyen de chauffage (40, 41, 42) pour l'échange de chaleur entre la pile à combustible (20) et l'unité d'humidification (10), ou comme un moyen de refroidissement (W1, 41b, 42b).

8. Unité de pile à combustible selon l'une des revendications 5 à 7,
**caractérisée en ce que** la chambre d'humidification (15) est segmentée en compartiments.

9. Unité de pile à combustible selon l'une des revendications 5 à 8,
**caractérisée en ce que** le système de commande est réalisé de telle façon qu'une quantité dosée de combustible est régulée vers l'unité d'humidification (10) sur la base de grandeurs caractéristiques de la pile à combustible telles que l'intensité du courant et/ou la température et/ou au moyen de l'état de remplissage déterminé par un dispositif de mesure d'état de remplissage (45) dans l'unité d'humidification (10) et/ou sur la base de la température dans l'unité d'humidification.

10. Unité de pile à combustible selon l'une des revendications 5 à 9,
**caractérisée en ce que** la pile à combustible est une pile à combustible à haute température.

11. Procédé pour préparer un gaz porteur contenant un combustible, dans lequel, dans une unité d'humidification qui est partiellement remplie avec un liquide contenant un combustible :
le liquide contenant le combustible est maintenu à une température au-dessous de son point d'ébullition,
le gaz porteur est amené en contact avec le liquide dans la chambre d'humidification (15), grâce à quoi le gaz porteur est enrichi avec le combustible, et
le gaz porteur enrichi en combustible est préparé,
**caractérisé en ce que** le gaz porteur contient de la vapeur d'eau, et il est prévu une régulation des pressions de vapeur de la vapeur de combustible et de la vapeur d'eau (12) par ajustement de la concentration en combustible et de la température du liquide (11) contenant le combustible.

12. Procédé selon la revendication 11,
**caractérisé en ce que** le gaz porteur est amené en contact avec le liquide contenant le combustible via un système pour enrichir le gaz porteur, grâce à quoi le gaz porteur est enrichi avec le liquide contenant le combustible.

13. Procédé pour l'alimentation d'une pile à combustible (20) avec un gaz porteur contenant un combustible, avec application d'un procédé selon la revendication 11 ou 12, dans lequel
le gaz porteur contenant le combustible gazeux est alimenté à la pile à combustible (20) et au moins une partie du gaz porteur gazeux enrichi dans la pile à combustible est alimenté depuis la pile à combustible (20) directement à l'unité d'humidification (10) à titre de gaz porteur, de sorte que le gaz porteur contenant le combustible est mené en circuit entre la pile à combustible (20) et l'unité d'humidification (10).

14. Procédé selon la revendication 13,
**caractérisé en ce qu'**il est prévu une commande de la température du liquide (11) contenant le combustible sur la base de l'un au moins des paramètres suivants : température du liquide (11) contenant le combustible, température de la pile à combustible (20), humidité d'un gaz d'échappement de cathode (27), capabilité de conduction protonique du système électrolytique, concentration du combustible dans le liquide (11) contenant le combustible, tension de sortie de la pile à combustible ou du groupe de piles à combustible (20), ou une grandeur de régulation dérivée de l'intensité du courant de la pile à combustible.

15. Procédé selon la revendication 13 ou 14,
**caractérisé en ce qu'**un gaz d'échappement de cathode (27) de la pile à combustible (20) est subdivisé en deux courants partiels (27a ; 27b) et les débits volumétriques des deux courants partiels sont subdivisés de manière réglée en fonction de l'état de remplissage et/ou de la température de l'unité d'humidification au moyen d'un système de commande, tel que l'un des courants partiels quitte le système sans être refroidi et que l'autre courant partiel est refroidi au moyen d'un échangeur de chaleur (28), et le condensat qui se produit lors du refroidissement est alimenté soit directement à l'autre courant partiel de l'unité d'humidification (10) soit à une chambre séparée (70 ; 70a ; 70b) à l'intérieur de l'unité d'humidification (10) pour capter le condensat.
